# EUROPÄISCHE PATENTANMELDUNG

(11) **EP 3 950 415 A1**
(43) Veröffentlichungstag der Anmeldung: **09.02.2022**
(21) Anmeldenummer: 21191389.2
(22) Anmeldetag: 20.04.2018
(51) Int. Cl.: B60L 53/63, B60L 8/00, H02J 7/00, H02J 15/00, B60L 53/52, B60L 53/53, H02J 3/32, H02J 7/34

(54) **VERFAHREN ZUM BETREIBEN EINER LADESTATION**

(30) Priorität: 21.04.2017 DE 102017108579
(62) Teilanmeldung aus: 18718827.1
(71) Anmelder: Wobben Properties GmbH, 26607 Aurich (DE)
(72) Erfinder: Brombach, Johannes, 13437 Berlin (DE); Strafiel, Christian, 26607 Aurich (DE); Pingel, Tobias, 04277 Leipzig (DE)
(74) Vertreter: Eisenführ Speiser

(57) **Zusammenfassung**

Die Erfindung betrifft ein Verfahren zum Betreiben einer Ladestation zum Laden mehrerer Elektrofahrzeuge, insbesondere Elektroautos, wobei die Ladestation an einem Netzanschlusspunkt (402) mit einem elektrischen Versorgungsnetz verbunden ist, um darüber mit elektrischer Energie aus dem elektrischen Versorgungsnetz versorgt zu werden, umfassend die Schritte Beziehen elektrischer Energie aus dem elektrischen Versorgungsnetz und Laden eines oder mehrerer Elektrofahrzeuge unter Verwendung der aus dem elektrischen Versorgungsnetz bezogenen elektrischen Energie, wobei die Ladestation so gesteuert wird, dass das elektrische Versorgungsnetz elektrisch gestützt wird, dadurch gekennzeichnet, dass das Beziehen der elektrischen Energie in Abhängigkeit einer Netzeigenschaft des elektrischen Versorgungsnetzes gesteuert wird, und dass eine Netzeigenschaft eine Eigenschaft des elektrischen Versorgungsnetzes bezeichnet, ausgewählt aus der Liste aufweisend: eine Netzsensitivität, die besonders als eine Spannungsreaktion des elektrischen Versorgungsnetzes am Netzanschlusspunkt (402) auf eine geänderte Leistungsentnahme der Ladestation am Netzanschlusspunkt (402) definiert ist, und ein Kurzschlussstromverhältnis, das ein Verhältnis eines am Netzanschlusspunkt (402) maximal durch das elektrische Versorgungsnetz bereitstellbaren Kurzschlussstrom in Bezug auf eine durch die Ladestation entnehmbare Nennleistung bezeichnet.

## Beschreibung

Die vorliegende Erfindung betrifft ein Verfahren zum Betreiben einer Ladestation zum Laden mehrerer Elektrofahrzeuge, insbesondere zum Laden mehrerer Elektroautos. Außerdem betrifft die vorliegende Erfindung eine solche Ladestation.

Durch eine zunehmende Anzahl von Elektrofahrzeugen, besonders Elektroautos besteht auch der Bedarf, entsprechende Ladestationen vorzusehen. Um besonders Elektroautos auch unterwegs laden zu können, werden Ladestationen ganz ähnlich wie heutzutage Tankstellen für Verbrennungskraftstoffe benötigt werden. Insoweit kann für eine solche Ladestation auch der Begriff "Elektrotankstelle" verwendet werden.

In solchen Ladestationen werden somit mehrere Fahrzeuge gleichzeitig geladen und die Fahrer der Elektrofahrzeuge erwarten dabei regelmäßig, dass diese Ladung möglichst schnell erfolgt, damit sie sich nicht zu lange an der Ladestation aufhalten müssen. Das führt aber zu dem Problem, dass entsprechend viel Energie den Elektrofahrzeugen auch in möglichst kurzer Zeit zugeführt werden muss.

Neben einer konkreten Steuerung jedes Ladevorgangs und auch einer konkreten Steuerung der Verteilung auf der Ladestation an die einzelnen jeweils zu ladenden Fahrzeuge, stellt sich auch das Problem, die Energie der Ladestation zuzuführen.

Dafür können entsprechende Anschlüsse an ein elektrisches Versorgungsnetz vorgesehen sein. Ein solcher Anschluss wird hier als Netzanschlusspunkt der jeweiligen Ladestation bezeichnet. Dabei ist zu beachten, dass solche Ladestationen häufig, zum Beispiel an einer Autobahn, vergleichsweise dezentral im Land aufgestellt sind. Damit können solche Ladestationen regelmäßig auch in Bezug auf eine Topologie des betreffenden elektrischen Versorgungsnetzes dezentral aufgestellt sein. Daraus kann sich das Problem ergeben, dass Leitungskapazitäten zum Bereitstellen der benötigten Ladeleistung begrenzt sind. Mitunter ist eine Ladestation für mehrere Fahrzeuge erst effizient betreibbar, wenn viele Fahrzeuge geladen werden können.

Um diesem Problem zu begegnen, kann ein entsprechender Ausbau des elektrischen Versorgungsnetzes vorgesehen sein, um die jeweils benötigten Leitungskapazitäten für die Ladestationen zu schaffen. Ein solcher Ausbau kann aber mitunter sehr aufwändig sein. Neben den Kosten für den Bau oder Veränderung solcher Anschlussleitungen, kommen auch entsprechende Genehmigungsverfahren hinzu. Außerdem oder deswegen kann eine solche Erhöhung der Leitungskapazität auch den Bau einer solchen Ladestation verzögern. Das kann dann sogar dazu führen, dass der Bau einer entsprechenden Ladestation generell scheitert.

Alternativ kann versucht werden, Ladestationen grundsätzlich nur dort aufzustellen, wo entsprechend hohe Leitungskapazitäten vorhanden sind. Das widerspricht aber einem Konzept, demnach solche Ladestationen möglichst gleichmäßig bzw. möglichst orientiert am Bedarf der zu ladenden Elektrofahrzeuge zu planen wären.

In jedem Fall ist auch zu berücksichtigen, dass eine solche Ladestation einen Einfluss auf das elektrische Versorgungsnetz hat. Besonders kann eine solche Ladestation auch das Problem haben, dass sie nicht sehr gleichmäßig Leistung zum Laden der Fahrzeuge benötigt, sondern mitunter Lastspitzen hat. Solche Lastspitzen können sowohl über den Tag verteilt auftreten, als auch über das Jahr verteilt, als auch situationsbedingt, wie beispielsweise im Falle eines Verkehrsstaus oder Unfalls auf einer Autobahn, an der die betreffende Ladestation betrieben wird. Somit kann nicht nur die Leistungslieferung vom elektrischen Versorgungsnetz an die betreffende Ladestation ein Problem sein, sondern auch die Belastung, die von der Ladestation auf das elektrische Versorgungsnetz ausgeht.

Aus dem US-Patent US 8,981,708 ist eine Ladevorrichtung bekannt, die elektrische Speicher von Elektrofahrzeugen aus dem Wechselspannungsnetz laden kann und in das Wechselspannungsnetz einspeisen kann.

Das Deutsche Patent- und Markenamt hat in der Prioritätsanmeldung zu vorliegender Anmeldung außerdem folgenden Stand der Technik recherchiert: DE 10 2009 050 042 A1, DE 10 2014 221 555 A1; DE 10 2015 114 704 A1 und WO 2017/021488 A1.

Der vorliegenden Erfindung liegt somit die Aufgabe zugrunde, zumindest eines der oben genannten Probleme zu adressieren. Insbesondere soll eine Lösung vorgeschlagen werden, die auf möglichst einfache Art und Weise den Anschluss von Ladestationen ermöglicht und dabei diesen Anschluss auch möglichst netzverträglich gestaltet. Zumindest soll zu bisher bekannten Lösungen eine alternative Lösung vorgeschlagen werden.

Erfindungsgemäß wird ein Verfahren zum Betreiben einer Ladestation gemäß Anspruch 1 vorgeschlagen. Diese Ladestation ist zum Laden mehrerer Elektrofahrzeuge vorgesehen. Es geht hierbei besonders um Elektroautos, was auch neben Personenkraftwagen, Busse und Lastkraftwagen beinhalten kann. Grundsätzlich kann eine solche Ladestation auch zum Laden anderer Elektrofahrzeuge vorgesehen sein bzw. die vorgeschlagene Lösung kann auch für andere Ladestationen sinnvoll sein, die keine Elektroautos lädt. Ladestationen für Elektroautos spielen hier aber eine besonders große Rolle, weil sie dezentral über das Land verteilt sind an Stellen, an denen teilweise sonst nichts vorhanden ist, dass Leistung benötigt oder Leistung bereitstellt. Außerdem haben solche Ladestationen für Elektroautos auch ein besonders Problem, sporadisch und mehr oder weniger unvorhergesehen Leistungsspitzen abdecken zu müssen.

Die diesem Verfahren zugrunde gelegte Ladestation ist an einem Netzanschlusspunkt mit einem elektrischen Versorgungsnetz verbunden. Über diesen Netzanschlusspunkt wird sie mit Energie aus dem elektrischen Versorgungsnetz versorgt. Im einfachsten Fall kann das bedeuten, dass jeweils bedarfsabhängig benötigte Ladeleistung auch als elektrische Leistung aus dem Netz entnommen wird. Es kommt aber, beispielsweise bei Verwendung eines Vorladespeichers, auch in Betracht, dass die aktuelle Ladeleistung nicht unbedingt exakt der aus dem elektrischen Versorgungsnetz entnommenen Leistung entsprechen muss. Diese Leistungen können also temporär voneinander abweichen, ihre über längere Zeit aufintegrierten Energien sollten sich aber entsprechen, wobei es Ausnahmen geben kann, wenn z.B. weitere Verbraucher der Ladestation Energie verbrauchen. Entsprechend ist ein Schritt des Verfahrens zum Betreiben der Ladestation, elektrische Energie aus dem elektrischen Versorgungsnetz zu beziehen. Es wird dann eines oder mehrere Elektrofahrzeuge unter Verwendung dieser aus dem elektrischen Versorgungsnetz bezogenen elektrischen Energie geladen. Grundsätzlich werden mehrere Elektrofahrzeuge gleichzeitig geladen. Gleichwohl kann nicht ausgeschlossen werden, dass auch einmal nur ein einzelnes Fahrzeug geladen wird. Grundsätzlich ist aber von vielen zu ladenden Elektrofahrzeugen auszugehen.

Erfindungsgemäß wird weiter vorgeschlagen, dass das Beziehen der elektrischen Energie in Abhängigkeit einer Netzeigenschaft des elektrischen Versorgungsnetzes gesteuert wird. Dadurch kann das Beziehen der elektrischen Energie so gesteuert werden, dass auf solche erfassten Netzeigenschaften entsprechend reagiert werden kann.

Eine Netzeigenschaft ist dabei als eine Eigenschaft zu verstehen, die das Netz als solches kennzeichnet. Dazu wird nun vorgeschlagen, dass die Ladestation so gesteuert wird, dass das elektrische Versorgungsnetz elektrisch gestützt wird. Demnach wird also nicht einfach nur die in dem Moment zum Laden benötigte Ladeleistung aus dem elektrischen Versorgungsnetz entnommen, sondern die Ladestation übernimmt auch Stützaufgaben des elektrischen Versorgungsnetzes.

Solche Stützaufgaben sind besonders solche, die bei zu starken Frequenzschwankungen oder Spannungseinbrüchen darauf stützend reagieren und nicht einfach nur unkontrolliert im Sinne eines Netzparallelbetriebs Leistung aus dem elektrischen Versorgungsnetz entnehmen. Verschiedene Arten und Aufgaben der Stützung werden noch nachfolgend beschrieben. Zunächst soll ein Beispiel genannt werden, nämlich dass eine Frequenzstützung vorgenommen werden kann.

Fällt beispielsweise die Netzfrequenz ab, ist es ein Zeichen, dass ein Leistungsunterangebot im elektrischen Versorgungsnetz, das hier generell auch vereinfachend als "Netz" bezeichnet werden kann, existiert. Auf solche Netzverhalten reagieren üblicherweise die Energieerzeugungsanlagen, also die Großkraftwerke, aber auch inzwischen dezentral einspeisende Anlagen, wie Windenergieanlagen oder Photovoltaikanlagen. Es wird nun hier aber vorgeschlagen, dass auch die Ladestation sich an einer Netzstützung beteiligt. Für das exemplarisch genannte Beispiel kann das bedeuten, dass die Ladestation die Entnahme elektrischer Leistung drosselt.

Vorzugsweise wird das Beziehen der elektrischen Energie so gesteuert, dass das elektrische Versorgungsnetz elektrisch gestützt wird. Eine Stützung des elektrischen Versorgungsnetzes durch die Ladestation kann beispielsweise auch so erfolgen, dass zusätzliche Leistung entnommen und in einem Verbraucher verbraucht wird. Die hier bevorzugte Lösung sieht aber vor, dass das Beziehen der elektrischen Energien, die also zum Laden der Elektroautos letztlich benötigt wird, derart gesteuert wird, dass dadurch das elektrische Versorgungsnetz elektrisch gestützt wird. Besonders fällt hierunter auch, das Beziehen der elektrischen Energie in seiner Qualität so zu steuern, dass das elektrische Versorgungsnetz elektrisch gestützt wird.

Besonders fällt hierunter, mit welcher Phasenlage die elektrische Energie bzw. für den Moment betrachtet die elektrische Leistung aus dem elektrischen Versorgungsnetz bezogen wird. Damit kann nämlich, im Idealfall, ohne Änderung der Höhe der bezogenen elektrischen Leistung, nämlich der bezogenen elektrischen Wirkleistung, eine Blindleistung in das elektrische Versorgungsnetz eingespeist bzw. entnommen werden. Dadurch kann besonders eine Spannungsstützung vorgenommen oder unterstützt werden.

Es wurde also erkannt, dass selbst ohne Verringerung der Wirkleistungsentnahme eine Netzstützung vorgenommen werden kann. Es wurde dabei auch erkannt, dass das Problem, dass eine solche Ladestation viel Leistung benötigt, gleichzeitig die Chance oder das Potential hat, auch in einem erheblichen Umfang für die elektrische Stützung des elektrischen Versorgungsnetzes eingesetzt zu werden.

Vorzugsweise wird vorgeschlagen, dass das Beziehen der elektrischen Energie in Abhängigkeit eines Netzzustandes des elektrischen Versorgungsnetzes gesteuert wird. Dadurch kann das Beziehen der elektrischen Energie so gesteuert werden, dass auf solche erfassten Netzzustände entsprechend reagiert werden kann. Ein Netzzustand ist dabei als eine Zustandsgröße des elektrischen Versorgungsnetzes zu verstehen. Das betrifft somit besonders momentane und dynamische Größen und ist besonders als Zustand im regelungstechnischen Sinne zu verstehen.

Vorzugsweise ist ein Netzzustand ein Zustand des elektrischen Versorgungsnetzes und kann eine Netzfrequenz, eine Netzfrequenzänderung, eine Netzspannung, eine Netzspannungsänderung und eine Oberwelligkeit der Netzspannung sein.

Besonders kann in Abhängigkeit der Netzfrequenz, zumindest kurzzeitig, das Beziehen elektrischer Wirkleistung verändert werden. Besonders bei einer zu niedrigen Frequenz, die beispielsweise um 0,3% oder mehr unterhalb einer Netznennfrequenz liegt, kann eine Wirkleistungsentnahme verringert werden.

Gleiches kann in Abhängigkeit einer Netzfrequenzänderung erfolgen, die letztlich eine zu hohe oder zu niedrige Frequenz schneller zu erkennen hilft. So kann also beispielsweise bei Erkennen eines starken Frequenzabfalls schon eine Verringerung der entnommenen Wirkleistung durchgeführt werden, selbst bevor eine zu niedrige Netzfrequenz erreicht wird.

Eine zu hohe oder zu niedrige Netzspannung kann besonders zu einer entsprechenden Blindleistungseinspeisung oder -entnahme führen bzw. zu einer Änderung vorhandener Blindleistungseinspeisung oder -entnahme. Besonders wird vorgeschlagen, kapazitive Blindleistung in das elektrische Versorgungsnetz einzuspeisen, wenn die Netzspannung einen vorbestimmten unteren Spannungsgrenzwert unterschreitet. Das Einspeisen solcher Blindleistung kann dadurch erfolgen, dass elektrische Leistung aus dem elektrischen Versorgungsnetz mit einem entsprechenden Phasenwinkel gegenüber der Netzspannung entnommen wird. Durch Einstellung dieses Phasenwinkels kann das Einspeisen bzw. Entnehmen der Blindleistung gesteuert werden.

Auch hier kommt in Betracht, eine Netzspannungsänderung zu betrachten, um entsprechende Spannungsabweichungen schnell erkennen zu können. Besonders die Betrachtung von Netzspannung und Netzspannungsänderung kann kombiniert werden.

Ebenfalls kann eine Oberwelligkeit der Netzspannung erfasst werden und davon abhängig die Qualität der Entnahmen der elektrischen Energie gesteuert werden. Die Ladestation wird letztlich die Elektrofahrzeuge mit Gleichstrom bzw. Gleichspannung laden. Die Entnahmen der elektrischen Energie können besonders mittels eines gesteuerten Gleichrichters erfolgen und dieser kann auch die Oberwelligkeit des durch ihn entnommenen Stromes beeinflussen. Dazu kann beispielsweise ein Filter am Gleichrichter vorgesehen sein oder der Gleichrichter steuert den Gleichrichtprozess entsprechend. Das kann beispielsweise durch die konkrete Wahl der Schaltzeitpunkte der gesteuerten Halbleiterschalter oder gesteuerten Dioden erreicht werden. Besonders ist vorgesehen, dass bei einer hohen Oberwelligkeit der Netzspannung mit möglichst wenig Oberwelligkeit eingespeist wird.

Die Betrachtung und Einbeziehung dieser Netzzustände kann auch kombiniert werden. Einige Kombinationen sind auch schon angesprochen worden. Es kommt aber beispielsweise auch in Betracht, dass eine frequenzabhängige Steuerung der Höhe der entnommenen Wirkleistung gegebenenfalls kombiniert wird mit einer netzspannungsabhängigen Steuerung der Blindleistung, um nur ein Beispiel zu nennen.

Erfindungsgemäß ist eine Netzeigenschaft eine Eigenschaft des elektrischen Versorgungsnetzes, nämlich eine Netzsensitivität oder ein Kurzschlussstromverhältnis. Eine Netzsensitivität wird hier besonders definiert als eine Spannungsreaktion des elektrischen Versorgungsnetzes am Netzanschlusspunkt auf eine geänderte Leistungsentnahme der Ladestation am Netzanschlusspunkt. Wird also die Leistungsentnahme der Ladestation am Netzanschlusspunkt geändert, also beispielsweise um 100kW erhöht, führt das zu einer Spannungsreaktion, besonders einer Spannungsverringerung am Netzanschlusspunkt, bspw. 100V, wenn die Netzspannung 10kV beträgt. Dieses Verhältnis dieser Spannungsverringerung auf die Leistungserhöhung, im Beispiel also 100V/100kW (=1V/kW) kann beispielsweise die Netzsensitivität bilden. Die Netzsensitivität ist somit ein Maß dafür, wie das elektrische Versorgungsnetz, und zwar bezogen auf den Netzanschlusspunkt, auf eine Wirkleistungsänderung reagiert. Je stärker die Spannungsreaktion, umso höher ist die Netzsensitivität, umso sensitiver ist also das Netz.

Abhängig dieser Netzsensitivität wird somit gemäß einer Ausführung das Beziehen der elektrischen Energie gesteuert. Es kommt besonders in Betracht, dass eine Regelungsdynamik, die das Beziehen der elektrischen Energie regelt, eine Verstärkung aufweist, die von der Netzsensitivität abhängt. Die Verstärkung kann bspw. umso kleiner gewählt werden, je größer die Netzsensitivität ist. Der Regler regelt hierbei die entnommene Leistung auf einen Sollwert aus und die Dynamik, mit der das geschieht, wird durch diese Verstärkung geändert. Das ist aber nur ein Beispiel und es kommt auch in Betracht die generelle Art einer solchen Regelung in Abhängigkeit der Netzsensitivität zu verändern, also beispielsweise eine Dämpfung einzustellen.

Es kann auch eine Regelung in Abhängigkeit wenigstens eines Netzzustandes abhängig der Netzsensitivität eingestellt werden. Bspw. kann eine frequenzabhängige Leistungssteuerung in ihrer Dynamik abhängig der Netzsensitivität eingestellt werden.

Ein Kurzschlussstromverhältnis ist ein Verhältnis eines am Netzanschlusspunkt maximal durch das elektrische Versorgungsnetz bereitstellbaren Kurzschlussstroms in Bezug auf eine durch die Ladestation entnehmbare Nennleistung. Ein solches Kurzschlussstromverhältnis geht somit von dem Fall eines Kurzschlusses am Netzanschlusspunkt aus. Tritt ein solcher Kurzschluss auf, gibt es einen maximalen Kurzschlussstrom, der durch das elektrische Versorgungsnetz bereitgestellt werden kann.

Ein solcher Kurzschlussstrom wird besonders durch entsprechende Leitungskapazitäten des elektrischen Versorgungsnetzes in Bezug auf relevante Leistungseinspeiser bestimmt, also durch die entsprechende Leitungsimpedanz. Auch das Kurzschlussstromverhältnis ist insoweit eine Eigenschaft, die sich konkret auf den Netzanschlusspunkt bezieht. Dieser Kurzschlussstrom wird dann in Bezug auf die Nennleistung der Ladestation gesetzt. Die Nennleistung der Ladestation ist insoweit die Leistung, die die Ladestation entnehmen kann. Das ist einerseits natürlich ein Wert, der regelmäßig zertifiziert ist, bestimmt sich unter anderem aber physikalisch durch die Eigenschaft besonders des Gleichrichters oder bidirektionalen Wechselrichters, mit dem die elektrische Leistung aus dem elektrischen Versorgungsnetz entnommen wird. Das Kurzschlussstromverhältnis ist somit auch eine Netzeigenschaft, die auf den Netzanschlusspunkt bezogen ist und dabei auf die Größe der Ladestation bezogen wird. Je größer ein solches Kurzschlussstromverhältnis ist, umso stärker ist das elektrische Versorgungsnetz.

Besonders wird hier vorgeschlagen, dass eine netzzustandsabhängige Steuerung oder Regelung des Beziehens der Energie besonders sensibel eingestellt ist, wenn das Kurzschlussstromverhältnis klein ist. Auch das ist nur ein Beispiel und auch hier kommen andere Arten der Berücksichtigung in dem Regler in Betracht. Es kommt aber beispielsweise auch in Betracht, abhängig von dem Kurzschlussstromverhältnis einen maximalen Strom vorzugeben, oder ein maximales Verhältnis von Blindleistung zu Nennleistung der Ladestation vorzugeben.

Es wurde erkannt, dass ein Kurzschlussstromverhältnis, das auch durch ein Kurzschlussleitungsverhältnis gekennzeichnet sein kann, bei Ladestationen besonders wichtig sein kann. Bei Windenergieanlagen oder anderen dezentralen Einspeisern an schwachen Netzverknüpfungspunkten (NVP) resultiert aus einer Spannungsanhebung durch die Einspeisung ein kleinerer Strom und das wirkt der Spannungsanhebung entgegen. Zusammen mit einer Spanungsstabilisierung durch Blindleistungseinspeisung, wenn ein Betrieb an einem oberen Rand des Spannungsbandes erfolgt, kann auch an sehr schwachen Netzverknüpfungspunkten (NVP), besonders wenn das Kurzschlussstromverhältnis kleiner als 2 ist (SCR<2) noch eingespeist werden. Nun wird hier eine Spannungsstützung durch eine Ladestation vorgeschlagen, und damit insbesondere auch eine Spannungsstützung durch einen Verbraucher. Dabei ist zu beachten, dass für diesen Fall bedeutet eine kleinere Spannung einen größeren Laststrom bedeuten kann. Es ist dabei so zu steuern, dass die Spannung nicht aus einem zulässigen Band fällt und das Netz nicht instabil wird.

Gemäß einer Ausführungsform wird vorgeschlagen, dass das Beziehen elektrischer Energie in Abhängigkeit vorgebbarer Sollwerte gesteuert wird, insbesondere in Abhängigkeit eines oder mehrerer durch ein externes Signal vorgebbarer Leistungswerte. Damit wird ermöglicht, dass die Ladestation besonders von einem Netzbetreiber zur Steuerung, besonders zum Steuern der Stabilität des elektrischen Versorgungsnetzes mit verwendet werden kann. Durch ihn oder anderweitig können Sollwerte vorgegeben werden. Das kann besonders die jeweils zu entnehmende Wirkleistung betreffen. Solche Sollwerte können dabei eine Obergrenze angeben, die in dem Moment maximal als Wirkleistung entnommen werden kann. Sofern die Ladestation aber zum variableren Einteilen ihrer Leistung befähigt ist, weil sie beispielsweise einen Vorladespeicher aufweist, oder sie zusätzliche steuerbare Verbraucher aufweist, kann auch unmittelbar jeweils die entnommene Leistung auf einen solchen vorgebbaren Sollwert gesteuert werden bzw. eingeregelt werden.

Solche Sollwerte können aber auch Blindleistungssollwerte sein, durch die eine einzustellende Blindleistung vorgegeben wird. Wird für das Vorgeben solcher Sollwerte ein externes Signal verwendet, kann dadurch die Ladestation von einer externen Stelle zur Steuerung verwendet werden. Eine solche externe Stelle kann eine zentrale Steuereinheit und/oder eine Eingriffsmöglichkeit für den Netzbetreiber sein. Besonders kann der Netzbetreiber Wirkleistungssollwerte vorgeben, um dadurch ein Leistungsmanagement im elektrischen Versorgungsnetz zu steuern. So kann er beispielsweise die Ladestation dazu verwenden, Leistungsspitzen abzuschwächen.

Gemäß einer Ausführungsform wird vorgeschlagen, dass das Beziehen der elektrischen Energie so gesteuert wird, dass Leistung aus dem Versorgungsnetz, insbesondere Wirkleistung, in Abhängigkeit der Netzfrequenz bezogen wird. Besonders durch eine solche frequenzabhängige Leistungssteuerung kann sich die Ladestation unmittelbar und auf einfache Art und Weise an einer Leistungssteuerung im Netz und damit einer entsprechenden Stützung des Netzes beteiligen.

Vorzugsweise wird vorgeschlagen, dass die Ladestation in Abhängigkeit eines Netzzustandes und außerdem oder alternativ in Abhängigkeit einer Vorgabe durch einen Netzbetreiber des Versorgungsnetzes Blindleistung aus dem Versorgungsnetz bezieht oder in dieses einspeist. Somit kann auch eine Ladestation auf einfache Art und Weise zur Spannungsstützung des Netzabschnitts, an dem sie angeschlossen ist, verwendet werden. Auch hier wurde erkannt, dass eine solche Spannungssteuerung durch Blindleistungseinspeisung nicht nur durch Erzeuger, sondern auch durch Verbraucher durchgeführt oder ergänzt werden kann. Besonders wurde erkannt, dass eine Ladestation dafür geeignet sein kann, weil sie eine entsprechende Flexibilität aufweisen kann und weil Ladestationen dezentral über das Land verteilt sein können. Außerdem benötigen Ladestationen wenigstens einen Gleichrichter oder ähnliche Einrichtungen, um die Wechselspannung des elektrischen Versorgungsnetzes in Gleichspannung zum Laden der Elektrofahrzeuge zu wandeln. Damit weist jede Ladestation ein Steuerungsmittel auf, das für eine solche vorgeschlagene Netzstützung eingesetzt werden kann.

Vorzugsweise wird vorgeschlagen, dass die Ladestation dazu vorbereitet ist, Netzfehler im Versorgungsnetz zu durchfahren. Das bedeutet besonders, dass die Ladestation im Falle eines Netzfehlers mit dem Versorgungsnetz verbunden bleibt und elektrische Leistung in Abhängigkeit eines Netzzustandes und/oder in Abhängigkeit einer Vorgabe durch den Netzbetreiber aus dem Versorgungsnetz entnimmt oder einspeist. Es wird also besonders vermieden, dass in einem Fall eines Netzfehlers, bei dem beispielsweise die Netzspannung stark abfällt, die Ladestation sich nicht einfach vom Netz trennt und das Netz sich selbst überlässt, sondern weiterhin am Netz verbleibt und steuernd eingreifen kann.

Besonders vorteilhaft zum Stützen des elektrischen Versorgungsnetzes im Fall eines Netzfehlers ist, dass die Ladestation dadurch, dass sie am Netz verbunden bleibt, auch unmittelbar weiter betrieben werden kann. Besonders dadurch, dass die Ladestation hinsichtlich ihrer Leistungsentnahme variabel betrieben werden kann, kann sie ein wichtiges Element auch beim Beheben eines solchen Fehlers sein. Sollte der Fehler so schwerwiegend gewesen sein, dass die Netzspannung sogar zusammengebrochen ist, so ist es beim Netzwiederaufbau, wenn die Netzspannung also durch entsprechende Einspeiserwieder hochgefahren wird, hilfreich, steuerbare Verbraucher zu haben, die je nach Fortschritt des Netzwiederaufbaus ihren Verbrauch anpassen können.

Außerdem oder alternativ bedeutet das Durchsteuern des Netzfehlers im Versorgungsnetz, dass die Ladestation so gesteuert wird, dass sie nach dem Netzfehler so viel Leistung aus dem Versorgungsnetz bezieht, wie unmittelbar vor dem Netzfehler. Die Ladestation wird also so gesteuert, dass sie nach dem Netzfehler möglichst schnell wieder an ihren alten Arbeitspunkt zurückkehrt. Besonders wenn die Ladestation keinen Eingriff zur Steuerung von außen aufweist, kann dadurch ein definierter Betriebszustand der Ladestation vorgegeben werden, auf den sich der Netzbetreiber beim Beheben des Netzfehlers einstellen kann.

Gemäß einer Ausführungsform wird vorgeschlagen, dass die Ladestation so gesteuert wird, dass sie in Abhängigkeit eines Netzzustandes und außerdem oder alternativ in Abhängigkeit einer Vorgabe durch den Netzbetreiber elektrische Leistung aus einem elektrischen Speicher der Ladestation in das elektrische Versorgungsnetz einspeist. Diese Variante setzt einen solchen elektrischen Speicher der Ladestation voraus und ein solcher elektrische Speicher kann beispielsweise eine Batteriebank mit diversen Batterien sein. Ein solcher Speicher kann beispielsweise als Vorladespeicher in der Ladestation vorhanden sein, um damit besonders in Stoßzeiten Elektroautos mit mehr Leistung zu laden, als in dem Moment aus dem elektrischen Versorgungsnetz entnommen werden kann.

Hier wird aber vorgeschlagen, einen solchen elektrischen Speicher dazu zu verwenden, gezielt zur Netzstützung elektrische Leistung, nämlich elektrische Wirkleistung, aus dem Speicher in das Versorgungsnetz einzuspeisen. Das kann besonders auch in Abhängigkeit einer Netzfrequenz erfolgen, wenn diese nämlich unter einen vorgebbaren unteren Frequenzwert unterhalb der Netznennfrequenz absinkt. Damit wird die bereits vorgeschlagene Variante, die entnommene Wirkleistung in einem solchen Fall zu reduzieren, noch weiter verbessert. Im Extremfall kann hierdurch der Stützbereich, den die Ladestation durch das Steuern der Wirkleistung hat, verdoppelt werden. Diese Verdopplung ergibt sich dadurch, dass ohne der Möglichkeit Wirkleistung einzuspeisen, die Steuerungsmöglichkeit der Ladestation im Bereich von keiner Wirkleistungsentnahme bis maximaler Nennwirkleistungsentnahme liegt. In der Annahme, dass die Begrenzung, die der entnehmbaren Nennwirkleistung zugrunde liegt, auch eine Begrenzung für einspeisbare Wirkleistung ist, kann dieser Arbeitsbereich nun nach unten erweitert werden, nämlich von keiner Wirkleistung einzuspeisen bis zu Wirkleistung in Höhe der Nennwirkleistung der Ladestation einzuspeisen. Der Arbeitsbereich reicht dann also von Wirkleistung in Höhe der Nennwirkleistung einzuspeisen bis Wirkleistung in Höhe der Nennwirkleistung zu entnehmen.

Vorzugsweise wird vorgeschlagen, dass die Ladestation in Abhängigkeit der Netzfrequenz und außerdem oder alternativ in Abhängigkeit einer Änderung der Netzfrequenz eine Momentanreserve bereitstellt. Für diese Momentanreservebereitstellung wird vorgeschlagen, dass die Ladestation die momentan aus dem Versorgungsnetz entnommene Leistung verringert und/oder Leistung aus dem elektrischen Speicher der Ladestation in das Versorgungsnetz einspeist. Besonders wird hier vorgeschlagen, die bereits erläuterten Stützmöglichkeiten des Netzes durch Einspeisung oder Entnahme von Wirkleistung als Momentanreserve bereitzustellen. Eine solche Momentanreserve betrifft den Fall, dass kurzfristig und kurzzeitig in Abhängigkeit der Frequenz oder Frequenzänderung eine Wirkleistung eingespeist wird, also besonders bei Verringerung der Netzfrequenz. Eine solche Momentanreserve kann besonders bei kurzfristigen Netzereignissen zum Stützen beitragen. Häufig können, besonders durch ein Zuschalten großer Lasten im elektrischen Versorgungsnetz, schnelle Leistungsspitzen auftreten, die sich in einem solchen kurzfristigen Frequenzabfall bemerkbar machen. Dabei kann eine kurze Stützung von beispielsweise 1 bis 10 Sekunden, meist maximal 30 Sekunden, ausreichend sein. Dass eine solch kurze Einspeisung reichen kann, liegt besonders daran, dass viele Einspeiser auf solche Leistungsspitzen nicht schnell genug reagieren können. Durch die so zur Verfügung gestellte Momentanreserve kann kurzfristig ein Teil des Leistungsbedarfs übernommen werden und die langsam ausregelnden Einspeiser haben dann mehr Zeit, diesen zusätzlichen Leistungsbedarf auszuregeln. Gleichzeitig wird auch erreicht, dass der Frequenzabfall durch die bereitgestellte Momentanreserve moderater ausfällt, was wiederum eine Regelungsüberreaktion langsamer regelnder Energieeinspeiser vermeiden hilft.

Gemäß einer Ausführungsform wird vorgeschlagen, dass die Ladestation in Abhängigkeit der Netzfrequenz und/oder einerÄnderung der Netzfrequenz zusätzliche Leistung aus dem Versorgungsnetz aufnimmt, indem die Ladestation die momentan aus dem Versorgungsnetz entnommene Leistung erhöht, um mehr Leistung in den elektrischen Speicher der Ladestation einzuspeichern und/oder indem die Ladestation die Leistung zum Laden des einen oder der mehreren Elektrofahrzeuge erhöht.

Es wird hier also konkret vorgeschlagen, abhängig der Netzfrequenz zusätzliche Leistung aus dem Versorgungsnetz aufzunehmen und in einem Speicher zu speichern oder gezielt die Leistung zum Laden der Elektrofahrzeuge zu erhöhen. Die Erhöhung der momentan aus dem Versorgungsnetz entnommenen Leistung bezieht sich insoweit auf die in dem Moment entnommene Leistung. Also besonders die Leistung, die sich durch den in dem Moment aktuellen Bedarf der Elektrofahrzeuge ergibt, die geladen werden sollen. Aus diesem Ladeauftrag der Elektrofahrzeuge ergibt sich eine bestimmte Leistung, die aus dem elektrischen Versorgungsnetz genommen wird. Genau diese Leistung wird hier nun aber erhöht, nämlich besonders bei einem Anstieg der Netzfrequenz bzw. wenn die Netzfrequenz bereits einen vorbestimmten oberen Frequenzgrenzwert erreicht hat. Hierbei wird diese zusätzlich entnommene Leistung gleichwohl sinnvoll eingesetzt.

Außerdem oder alternativ wird vorgeschlagen, dass dieses zusätzliche Aufnehmen von Leistung aus dem Versorgungsnetz dadurch erfolgt, dass Leistung in einem zusätzlichen Verbraucher verbraucht wird. Ein solcher zusätzlicher Verbraucher ist insoweit ein Verbraucher, der besonders kein zu ladendes Fahrzeug ist, sondern ein gänzlich anderer Verbraucher. Dabei ist ein solcher zusätzlicher Verbraucher einer, der in dem beschriebenen Fall gezielt angesteuert werden kann, der also gezielt zum Verbraucher der Leistung angesteuert werden kann.

Vorzugsweise wird dafür ein Choppersystem vorgeschlagen, das elektrische Leistung gezielt in eine Widerstandsanordnung aus einem oder mehreren elektrischen Widerständen steuert, um dadurch diese zusätzliche Leistung thermisch zu verbrauchen. Dieses Choppersystem stellt insoweit den zusätzlichen einstellbaren Verbraucher dar und es hat ausschließlich die Funktion, überschüssige Leistung zu verbrauchen. Eine solche Situation kann besonders dann hilfreich sein, wenn sich ein großer Verbraucher von dem elektrischen Versorgungsnetz getrennt hat und/oder wenn es einen so genannten "Systemsplit" gegeben hat, bei dem sich ein Netzteil von einem anderen Netzteil getrennt hat. Eine solche Netztrennung führt regelmäßig dazu, dass die Leistungsbilanzen in den beiden nun voneinander getrennten Netzabschnitten nicht mehr ausgewogen sind. Es kann dann also plötzlich zu einem Leistungsüberangebot in dem elektrischen Versorgungsnetz bzw. dem abgetrennten Netzabschnitt kommen. Ist dies der Teil des elektrischen Versorgungsnetzes, an den auch die Ladestation angeschlossen ist, so kann die Ladestation dieses Leistungsüberangebot verringern, indem sie gezielt Leistung verbraucht. Eine solche Situation tritt auch selten und meist nur für kurze Zeit auf. Wenn Sie aber auftritt, ist es wichtig, ihr mit einer entsprechenden Steuerung zu begegnen, um den schlimmsten Fall eines Netzzusammenbruchs zu vermeiden.

Gemäß einer vorteilhaften Ausführungsform wird vorgeschlagen, dass zum Beziehen elektrischer Energie aus dem Versorgungsnetz elektrische Leistung aus dem Versorgungsnetz entnommen wird, und für diese Entnahme elektrischer Leistung aus dem Versorgungsnetz wenigstens eine Änderungsgrenze vorgegeben wird. Eine solche Änderungsgrenze begrenzt Änderungen der elektrischen Leistung in ihrerÄnderungsgeschwindigkeit. Mit anderen Worten werden hier Leistungsflanken vorgegeben, die verhindern, dass die Leistung zu schnell geändert wird. Besonders kann hierdurch eine zu schnelle, besonders sprunghafte Leistungsänderung verhindert werden. Eine solche sprunghafte Leistungsänderung könnte auftreten, wenn insoweit unkoordiniert ein neuer Ladevorgang zum Laden eines Elektrofahrzeugs so begonnen wird, dass die dafür benötigte Leistung direkt aus dem Versorgungsnetz bezogen wird. Besonders beim Anschließen eines Elektroautos an einer Ladesäule und dem Starten eines Ladevorgangs können anfangs sehr hohe Ströme und damit sehr hohe Leistungen auftreten. Besonders dann, wenn Elektrofahrzeuge, besonders Elektroautos, mit einem Schnellladevorgang geladen werden sollen, können hier hohe Spitzen auftreten.

Das Vorgeben der Änderungsgrenze, also das Vorgeben einer Flanke mit maximaler Steilheit, verhindert, dass solche Ladespitzen direkt an das elektrische Versorgungsnetz weitergegeben werden. Im Übrigen kann eine solche Änderungsgrenze auch für eine abnehmende Leistung wirken.

Die Umsetzung einer solchen Änderungsgrenze kann beispielsweise so erfolgen, dass Energiespeicher wie ein Vorladespeicher solche Leistungsspitzen puffern. Es kommt aber auch in Betracht, dass ein konkreter Ladevorgang eines Elektrofahrzeugs angepasst wird. Es kommt auch in Betracht, dass gegebenenfalls eine solche Begrenzung der Leistungsänderung durch eine entsprechend sinnvolle Gesamtsteuerung aller Ladesäulen der Ladestationen erreicht wird. Besonders kann dadurch, dass vermieden wird, dass mehrere Ladevorgänge, besonders Schnellladevorgänge, mehrerer Autos zeitgleich starten, eine große Leistungsspitze verhindert werden.

Vorzugsweise wird ein gemeinsamer Grenzgradient dem Betrage nach vorgegeben, oder ein oberer und ein unterer Grenzgradient. Dadurch kann sowohl ein zeitlicher Anstieg als auch ein zeitlicher Abfall der Leistung begrenzt werden. Besonders kann es je nach Netzanforderung sinnvoll oder gewünscht sein, dass Leistungsanstiege und Leistungsabfälle unterschiedlich stark, also unterschiedlich schnell sein dürfen. Dem kann durch Verwendung zweier Grenzgradienten, nämlich eines oberen und eines unteren, Rechnung getragen werden.

Vorzugsweise wird daher auch vorgeschlagen, dass zusätzlich benötigte oder weniger benötigte Leistung, insbesondere bedingt durch die Begrenzung der Änderungsgeschwindigkeit der entnommenen Leistung, durch Verwenden des elektrischen Speichers der Ladestation, Variation der Ladeleistung der jeweils zu ladenden Elektroautos und/oder Ansteuern weiterer Verbraucher der Ladestation bereitgestellt bzw. aufgenommen wird. Ein Ansteuern weiterer Verbraucher der Ladestation kann auch das Ansteuern eines genannten Choppersystems beinhalten.

Die Variation der Ladeleistung der jeweils zu ladenden Elektrofahrzeuge kann auch bedeuten, dass das Laden mehrerer Elektrofahrzeuge entsprechend koordiniert wird. Eine bevorzugte Koordination sieht so aus, dass eine Ladeleistungsspitze eines Elektrofahrzeugs dadurch kompensiert wird, dass die Ladeleistung von Elektrofahrzeugen, die sich bereits im Prozess des Ladens befinden, angepasst werden kann.

Dieser Erkenntnis liegt besonders der Fall zugrunde, dass viele Elektrofahrzeuge an einer Ladesäule angeschlossen sind und bereits seit einiger Zeit geladen werden, so dass bei ihnen die anfängliche Ladestromspitze oder Ladeleistungsspitze bereits vorüber ist. Wird nun ein neues Fahrzeug an eine Ladesäule angeschlossen und soll schnell geladen werden, so tritt dort am Anfang eine Ladeleistungs- oder Ladestromspitze auf. Um diese nicht an das elektrische Versorgungsnetz weiterzuleiten, können die übrigen Elektrofahrzeuge, die bereits seit einiger Zeit geladen werden, jeweils um einen geringen Strom- bzw. Leistungsbetrag in ihrem Ladevorgang reduziert werden. Das Reduzieren erfolgt besonders so, dass die Summe all dieser kleineren Leistungsverringerungen der vielen angeschlossenen Elektrofahrzeuge insgesamt dem zusätzlichen Ladebedarf bzw. der Ladespitze des neu hinzugekommenen Elektrofahrzeugs entspricht. Die Ladespitze wird also auf die anderen Fahrzeuge, die bereits mitten im Ladeprozess sind, verteilt.

Gemäß einer weiteren Ausführungsform wird vorgeschlagen, dass das Beziehen elektrischer Energie aus dem Versorgungsnetz, das Laden der Elektrofahrzeuge und/oder ein Ansteuern weiterer Verbraucher der Ladestation unter Verwendung eines virtuellen Speichers gesteuert wird. Ein solcher virtueller Speicher berücksichtigt Leistung, die die Ladestation bereitstellen kann als geladene Speicherkapazität. Leistung, die die Ladestation bereitstellen kann, ist insoweit insbesondere Leistung zum Laden der Elektrofahrzeuge als auch Leistung zum Einspeisen in das Versorgungsnetz. Außerdem berücksichtigt dieser virtuelle Speicher Leistung, die die Ladestation aufnehmen kann, als aufladbare Speicherkapazität. Leistung, die sie aufnehmen kann, ist insbesondere welche, die aus dem Versorgungsnetz bezogen werden kann.

Ein solcher virtueller Speicher fasst somit abgebbare und aufnehmbare Leistung als Speicherkapazität zusammen. Beispielsweise kann der virtuelle Speicher zunächst von einem tatsächlichen elektrischen Speicher wie beispielsweise einem Vorladespeicher ausgehen und die darin enthaltene Energie als geladene Speicherkapazität berücksichtigen. Zusätzlich kann die Leistung hinzukommen, die direkt aus dem Versorgungsnetz bezogen werden kann und direkt zum Laden der Elektrofahrzeuge verwendet werden kann. Hierzu kann beispielsweise ein Zeithorizont zugrundegelegt werden, der sich beispielsweise an einer typischen Ladezeit eines Elektrofahrzeugs orientieren kann. Beispielsweise kann dieser Zeithorizont 10 Minuten oder eine halbe Stunde betragen. Die in dem tatsächlichen Speicher gespeicherte Energie kann hierfür um die Energie ergänzt werden, die für den Zeithorizont aus dem elektrischen Versorgungsnetz bezogen werden kann. Die Summe dieser beiden Energien bildet dann die geladene Speicherkapazität des virtuellen Speichers. Zum Laden der Elektrofahrzeuge steht dann also diese geladene Speicherkapazität des virtuellen Speichers zur Verfügung.

Ebenso kann eine solche Berechnung zum Zwecke des Einspeisens elektrischer Leistung in das Versorgungsnetz verwendet werden. Auch hier kann die tatsächlich geladene Speicherkapazität bzw. gespeicherte Energie eines tatsächlichen Speichers als Ausgangspunkt genommen werden. Davon kann eine in dem Moment verwendete Ladeleistung, mit der gerade Elektrofahrzeuge geladen werden, unter Berücksichtigung des Zeithorizonts abgezogen werden. Gleichzeitig kann bei diesem Abziehen aber berücksichtigt werden, dass für den Fall, dass Leistung in das elektrische Versorgungsnetz eingespeist werden soll, eine mögliche Reduzierung der aktuellen Ladeleistung in Betracht kommt. Die Speicherkapazität des virtuellen Speichers erhöht sich dann wieder etwas durch diesen Wert, um den die aktuelle Ladeleistung reduziert werden kann.

Für den Fall, dass das Aufnehmen von Leistung aus dem elektrischen Versorgungsnetz zu steuern ist, kann ebenfalls der virtuelle Speicher verwendet werden. Auch hier kann von einem tatsächlichen Speicher ausgegangen werden. Ist dieser noch nicht vollgeladen, ist die Energiemenge, um die er noch vollgeladen werden kann, eine aufladbare Speicherkapazität. Zusätzlich kann die Ladestation Leistung aus dem Netz aufnehmen, um damit Elektrofahrzeuge zu laden. Auch dies kann als aufladbare Speicherkapazität bei Berücksichtigung des genannten Zeithorizonts in dem virtuellen Speicher berücksichtigt werden. Auch eine Leistungsmenge, die mittels eines oder mehrerer steuerbarer Verbraucher verbraucht werden kann, kann unter Berücksichtigung des Zeithorizonts zu der aufladbaren Speicherkapazität des virtuellen Speichers hinzugerechnet werden.

Die Verwendung eines tatsächlichen Speichers wurde besonders zum Zwecke der Veranschaulichung erläutert. Ein solcher tatsächlicher Speicher ist vorzugsweise auch vorgesehen, der virtuelle Speicher kann aber auch verwendet werden, wenn kein tatsächlicher Speicher vorhanden ist. Hierbei bräuchte nur der Wert der Speicherkapazität eines tatsächlichen Speichers auf den Wert Null gesetzt zu werden. Das Einspeisen elektrischer Leistung in das elektrische Versorgungsnetz wäre natürlich ohne tatsächlichen Speicher kaum möglich, auch wenn theoretisch Energie aus den Elektrofahrzeugen verwendet werden könnte. Die übrigen Fälle kommen aber auch praktisch ohne tatsächlichen Speicher aus. Aus Sicht des Netzes ist es aber häufig von untergeordneter Relevanz oder sogar egal, ob Leistung eingespeist oder weniger entnommen wird. Ein Verschieben der Leistungsaufnahme ergibt aus Sicht des Netzes einen Effekt wie ein Ausspeichern, also eine Lastreduktion, und späteres Einspeichern, also Lasterhöhung.

Mit dem Zugrundeliegen eines solchen virtuellen Speichers kann dann bspw. das Beziehen elektrischer Energie aus dem Versorgungsnetz gesteuert werden. Besonders kann das Einhalten von Flanken basierend auf dem virtuellen Speicher bzw. der für ihn berechneten Speicherkapazität berechnet werden. Auch das Laden der Elektrofahrzeuge kann die dafür vorhandene virtuelle Speicherkapazität berücksichtigen. Es kann dann allein aufgrund der virtuellen Speicherkapazität beurteilt werden, wie viel Energie bereitsteht.

Auch das Ansteuern weiterer Verbraucher kann durch die Verwendung des virtuellen Speichers vereinfacht werden. Die Leistung, die einem solchen ansteuerbaren bzw. steuerbaren Verbraucher zugeführt wird, kann in dem virtuellen Speicher als aufladbare Speicherkapazität berücksichtigt werden. Gleichzeitig kann ein Bedarf an aufladbarer Speicherkapazität berücksichtig werden und der Verbraucher kann dann so angesteuert werden, dass die berechnete aufladbare Speicherkapazität des virtuellen Speichers einem Bedarf an Speicherkapazität entspricht.

Ebenfalls kann ein Einspeisen elektrischer Leistung in das Versorgungsnetz unter Verwendung des virtuellen Speichers gesteuert werden. Es ist dabei auf einfache Art und Weise basierend auf der geladenen Speicherkapazität des virtuellen Speichers möglich, das Einspeisen elektrischer Leistung in das Versorgungsnetz der Höhe nach zu steuern.

Gemäß einer Ausführungsform wird vorgeschlagen, dass eine maximal aus dem Versorgungsnetz zu entnehmende Leistung fest oder variabel vorgebbar ist. Dabei ist unter einer festen Vorgabe zu verstehen, dass ein im Wesentlichen konstanter Wert vorgegeben wird, der aber zu einem späteren Zeitpunkt, beispielsweise an einem anderen Tag oder zu einer anderen Jahreszeit, auf einen anderen Wert gesetzt wird. Insbesondere wird vorgeschlagen, dass eine solche feste Vorgabe durch ein externes Signal erfolgt, besonders durch einen Netzbetreiber. Der Netzbetreiber kann hierdurch, wenn beispielsweise Kapazitätsprobleme der Leistungsversorgung zu erwarten sind, oder ein Netzengpass durch einen Ausfall eines Betriebsmittels vorliegt, einen entsprechend niedrigen Grenzwert für die maximal aus dem Versorgungsnetz zu entnehmende Leistung festsetzen.

Eine variable Vorgabe, ist insbesondere eine solche, die in Abhängigkeit einer Netzeigenschaft und/oder eines Netzzustands erfolgt. Diese Netzeigenschaft oder Netzzustand kann erfasst werden und über einen Algorithmus kann die maximal aus dem Versorgungsnetz zu entnehmende Leistung vorgegeben werden. Beispielsweise kommt eine frequenzabhängige Vorgabe des Maximalwertes in Betracht. Je nach gewähltem funktionalem Zusammenhang zwischen Netzfrequenz und dem Maximalwert kommt auch in Betracht, dass dieser Maximalwert dadurch ununterbrochen variiert, wenn auch nur um kleine Werte. Ist in einem solchen funktionalen Zusammenhang aber ein Totbandbereich vorgegeben, was hier als eine Ausführungsform vorgeschlagen wird, kann bei kleinen Frequenzänderungen, um bei diesem Beispiel zu bleiben, eine Variation dieses Maximalwertes unterbleiben.

Gemäß einer weiteren Ausgestaltung wird vorgeschlagen, dass wenigstens ein Betriebszustand wenigstens eines an die Ladestation oder dasselbe Versorgungsnetz angeschlossenen Windparks berücksichtigt wird und außerdem oder alternativ der wenigstens eine Windpark zumindest teilweise durch die Ladestation oder durch eine der Ladestation und dem wenigstens einen Windpark übergeordneten Gesamtsteuereinheit gesteuert wird. Es wird somit vorgeschlagen, einen Windpark und die Ladestation gemeinsam zu berücksichtigen, nämlich besonders zum Stützen des elektrischen Versorgungsnetzes. Dabei betrifft dies nur einen Windpark, der hinsichtlich der Topographie des elektrischen Versorgungsnetzes in einer solchen Nähe zur Ladestation angeschlossen ist, dass die Ladestation den Windpark oder zumindest den Netzabschnitt an dem der Windpark angeschlossen ist, beeinflussen kann. Dann können sich Synergien ergeben, wenn Ladestation und Windpark aufeinander abgestimmt oder sogar zusammen gesteuert werden. Beispielsweise kann es im Falle eines Leistungsüberangebotes in dem elektrischen Versorgungsnetz zweckmäßig sein, den Windpark und die Ladestation so zu steuern, dass zunächst der Windpark in seiner Erzeugung nicht gedrosselt wird, sondern die Ladestation vielmehr versucht, möglichst viel Leistung zu entnehmen und gegebenenfalls in einem Vorladespeicher zwischen zu speichern. Das ist aber nur ein Beispiel und als weiteres Beispiel kann der Windpark der Ladestation mitteilen, wenn ein Leistungseinbruch beispielsweise aufgrund einer erwarteten Windflaute bevorsteht. Es kommt auch in Betracht, dass Leistungsstützungen zwischen dem Windpark und der Ladestation aufgeteilt werden, so dass jede Einheit nur einen Teil einer Leistungsstützung übernehmen muss.

Vorzugsweise werden die Ladestation und der wenigstens eine Windpark dazu koordiniert, einen Leistungsfluss im Versorgungsnetz zu steuern und/oder eine Spannungsregelung im Versorgungsnetz zu unterstützen. Dies ist ein Vorschlag, besonders auch einer begrenzten Netzkapazität zu begegnen. Einen Leistungsfluss im Versorgungsnetz zu steuern kann besonders bedeuten, dass das Einspeisen durch den Windpark und besonders das Entnehmen durch die Ladestation so erfolgt, dass Leistungsflüsse im elektrischen Versorgungsnetz berücksichtigt werden. Besonders steht hier im Vordergrund, dass diese keine Grenzwerte überschreiten. Es kommt aber auch in Betracht, durch geeignete Blindleistungseinspeisung in einem vermaschten Netz eine Umverteilung von Leistungsflüssen vorzunehmen oder zumindest zu unterstützen.

Vorzugsweise wird vorgeschlagen, eine Spannungsregelung im Versorgungsnetz durch Windpark und Ladestation koordiniert vorzunehmen. Das kann ebenfalls über eine Blindleistungseinspeisung erfolgen. Das kann durch den Windpark und Ladestation gemeinsam vorgenommen werden oder zumindest so durchgeführt werden, dass es eine sinnvolle Aufteilung zwischen der Ladestation und dem Windpark gibt.

Erfindungsgemäß wird auch eine Ladestation zum Laden mehrerer Elektrofahrzeuge, insbesondere Elektroautos vorgeschlagen. Eine solche Ladestation ist an einem Netzanschlusspunkt mit einem elektrischen Versorgungsnetz verbunden, um darüber mit elektrischer Energie aus dem elektrischen Versorgungsnetz versorgt zu werden. Sie umfasst einen aktiven Gleichrichter oder einen bidirektionalen Wechselrichter zum Beziehen elektrischer Energie aus dem elektrischen Versorgungsnetz. Ein aktiver Gleichrichter ist insoweit ein Gleichrichter, der beim Gleichrichten auch gesteuert werden kann, um auf Ströme und Spannungen beim Gleichrichten Einfluss nehmen zu können. Unter einem bidirektionalen Wechselrichter ist einer zu verstehen, der nicht nur von Gleichstrom bzw. Gleichspannung in Wechselstrom bzw. Wechselspannung wechselrichten kann, sondern auch in die umgekehrte Richtung, nämlich vom Wechselstrom bzw. Wechselspannung in Gleichstrom bzw. Gleichspannung. Ein bidirektionaler Wechselrichter kann grundsätzlich auch dadurch realisiert werden, dass er einen Wechselrichter und einen Gleichrichter beinhaltet, die quasi parallelgeschaltet sind.

Außerdem weist die Ladestation mehrere Ladeterminals auf, wobei jedes Ladeterminal jeweils zum Laden eines der Elektrofahrzeuge unter Verwendung der aus dem elektrischen Versorgungsnetz bezogenen elektrischen Energie vorgesehen ist. Solche Ladeterminals können auch als Ladesäulen bezeichnet werden.

Weiterhin ist eine Zentralsteuerung vorgesehen zum Steuern der Ladestation, wobei die Zentralsteuerung dazu vorbereitet ist, die Ladestation so zu steuern, dass das elektrische Versorgungsnetz elektrisch gestützt wird. Diese Ladestation ist also nicht nur dazu vorbereitet, Elektrofahrzeuge zu laden, sondern sie kann gleichzeitig auch eine Netzstützung vorsehen. Das kann besonders mit der Zentralsteuerung gesteuert werden und mit dem aktiven Gleichrichter oder bidirektionalen Wechselrichter umgesetzt werden.

Vorzugsweise ist die Ladestation dazu vorbereitet, wie gemäß wenigstens einer vorstehend beschriebenen Ausführungsform betrieben zu werden. Insbesondere ist die Zentralsteuerung dazu vorbereitet, ein Verfahren gemäß wenigstens einer vorstehend beschriebenen Ausführungsform auszuführen. Mit der Ladestation können somit auch sämtliche Vorteile erreicht werden, die oben beschrieben wurden. Es ist zu beachten, dass allerdings nicht jede beschriebene Funktionalität mit einem aktiven Gleichrichter alleine durchgeführt werden kann. Sofern der aktive Gleichrichter alleine eine solche Funktionalität nicht erreichen kann, wie beispielsweise das aktive Einspeisen elektrischer Wirkleistung, wird der bidirektionale Wechselrichter oder gegebenenfalls ein zusätzliches Element, insbesondere ein einspeisefähiger Wechselrichter vorgeschlagen. Vorzugsweise wird für die beschriebenen Funktionalitäten eine Einheit vorgeschlagen, nämlich insbesondere der bidirektionale Wechselrichter.

Gemäß einer Ausführungsform wird vorgeschlagen, dass die Ladestation dadurch gekennzeichnet ist, dass sie wenigstens einen elektrischen Speicher aufweist, um darin elektrische Energie zwischen zu speichern. Der elektrische Speicher kann beispielsweise als Speicherbank mit Batteriespeichern ausgebildet sein.

Er ist insbesondere dazu vorgesehen, bei Bedarf durch das Zwischenspeichern mehr Leistung aus dem Versorgungsnetz aufnehmen zu können, als in dem Moment zum Laden von Elektrofahrzeugen benötigt wird. Insoweit kann der elektrische Speicher als Puffer dienen. Dadurch kann auch erreicht werden, dass die Leistungsentnahme aus dem Versorgungsnetz vergleichmäßigt werden kann, um dadurch auch das elektrische Versorgungsnetz zu stützen, nämlich dadurch, dass Leistungsspitzen vermieden werden können.

Außerdem oder alternativ ist der elektrische Speicher dazu vorgesehen, in dem elektrischen Speicher gespeicherte Energie bei Bedarf dazu zu verwenden, dass zum Laden der Elektrofahrzeuge temporär mehr Leistung bereitgestellt wird, als in dem Moment aus dem Versorgungsnetz entnommen wird. Durch den elektrischen Speicher kann somit auch auf eine Lastspitze zum Laden von Elektrofahrzeugen reagiert werden. Dabei kann zum Laden der Fahrzeuge eine solche Lastspitze bereitgestellt werden, die an dem Netzanschlusspunkt der Ladestation nicht bezogen werden kann.

Insbesondere ist der elektrische Speicher auch dazu vorgesehen, Leistung in das Versorgungsnetz einzuspeisen. Besonders dadurch kann auch eine Stützung des elektrischen Versorgungsnetzes vorgenommen werden, die das Einspeisen von Wirkleistung erforderlich macht. Insbesondere ist hierfür vorgesehen, den elektrischen Speicher für solche vorstehend beschriebenen Ausführungsformen der beschriebenen Verfahren zu verwenden, die vorsehen, elektrische Leistung in das Versorgungsnetz einzuspeisen.

Gemäß einer Ausgestaltung wird vorgeschlagen, dass wenigstens ein weiterer Verbraucher vorgesehen ist, um bei Bedarf, insbesondere wenn mehr Leistung aus dem Versorgungsnetz entnommen wird, als in dem Moment zum Laden von Elektrofahrzeugen benötigt wird, Leistung zu verbrauchen. Ein solcher Verbraucher kann somit besonders für Situationen der Netzstützung vorgesehen sein, bei denen zusätzliche Leistung aus dem elektrischen Versorgungsnetz entnommen werden muss, um damit besonders auf ein Leistungsüberangebot im elektrischen Versorgungsnetz zu reagieren.

Vorzugsweise ist die Ladestation, insbesondere die Zentralsteuerung, dazu vorgesehen, den wenigstens einen weiteren Verbraucher anzusteuern. Damit kann eine gesamte Steuerung der Ladestation diesen gesteuerten Verbraucher mit ansteuern und damit mit in ein Steuerungskonzept zur Netzstützung einbeziehen.

Vorzugsweise ist der weitere Verbraucher ein Choppersystem, das elektrische Leistung gezielt in eine Widerstandsanordnung aus einem oder mehreren elektrischen Widerständen steuert, um dadurch die Leistung thermisch zu verbrauchen. Ein solches Choppersystem kann besonders effizient und gut steuerbar Leistung verbrauchen. Das erfolgt besonders so, dass durch eine Pulsweitensteuerung ein Strom in seiner effektiven Höhe gesteuert wird. Dadurch kann auch besonders schnell und spontan eine Leistung gezielt zum Verbrauch und in seiner Höhe steuerbar in die Widerstände gesteuert werden. Ein solches Choppersystem kann beispielsweise an einem Gleichspannungszwischenkreis angeschlossen sein.

Gemäß einer Variante wird vorgeschlagen, dass der Verbraucher eine Umwandlungsvorrichtung ist, insbesondere ein Elektrolyseur, um elektrische Leistung in eine andere Energieform, insbesondere in ein Gas umzuwandeln. Überschüssige Leistung wird somit aus Sicht des Versorgungsnetzes verbraucht, dabei aber einer weiteren Verwendung zugeführt, nämlich besonders in Gas umgewandelt. Beispielsweise kommt eine Umwandlung in Wasserstoff oder in Methan in Betracht.

Gemäß einer weiteren Ausführungsform wird vorgeschlagen, dass die Ladestation über eine direkte elektrische Leitung zum Austausch elektrischer Leistung oder über dasselbe Versorgungsnetz mit einem Windpark gekoppelt ist, und dazu vorbereitet ist, die Steuerung der Ladestation mit einer Steuerung des Windparks, zumindest mit einer Steuergröße des Windparks zu koordinieren.

Eine solche Kopplung zwischen Ladestation und einem Windpark, wobei natürlich auch mehrere Ladestationen und/oder mehrere Windparks zur Kopplung vorgesehen sein können, ist insbesondere dann vorteilhaft, wenn sowohl die Ladestation als auch der Windpark dezentral aufgestellt sind, aber nahe zueinander aufgestellt sind. Dann kann erreicht werden, dass ein direkter Energietransport vom Windpark zur Ladestation erfolgt. Dieser kann den grundsätzlichen Energiebezug der Ladestation ergänzen, kann ihn grundsätzlich aber auch alleine zur Verfügung stellen, besonders dann, wenn ausreichend elektrische Speicher als Puffer vorhanden sind. Eine bevorzugte Kopplung wird so durchgeführt, dass die zu koppelnden Einheiten, also der wenigstens eine Windpark und die wenigstens eine Ladestation jeweils einen Gleichspannungszwischenkreis aufweisen und diese Gleichspannungszwischenkreise direkt gekoppelt werden. Gemäß einer Ausgestaltung sind nur zwei oder mehr Ladestationen mit einander gekoppelt. Dadurch können diese bei Bedarf Leistung direkt mit einander austauschen. Das ist besonders dann sinnvoll, wenn eine Ladestation stark und die andere schwach ausgelastet ist.

Vorzugsweise kann eine schwach ausgelastete Ladestation dazu verwendet werden, mehr Blindleistung in das Versorgungsnetz einzuspeisen, als eine stark ausgelastete, unabhängig davon, ob diese zum Leistungsaustausch direkt gekoppelt sind oder nicht.

Darüber hinaus ist es besonders vorteilhaft, wenn Ladestation und Windpark zum Stützen des Versorgungsnetzes gekoppelt sind. Besonders kann hier vorteilhaft koordiniert werden, dass ein Windpark besonders durch Leistungseinspeisung stützen kann, wohingegen eine Ladestation besonders durch Leistungsentnahme stützen kann. Somit kann eine Koordination so vorgesehen sein, dass besonders Stützanforderungen, die eine Leistungseinspeisung erforderlich machen, mit erster Priorität von dem Windpark zur Verfügung gestellt werden. Die Ladestation kann gegebenenfalls unterstützen. Entsprechend kann vorgesehen sein, dass eine Stützanforderung, bei der elektrische Leistung entnommen werden muss, an erster Priorität von der Ladestation durchgeführt wird. Hier kann dann der Windpark unterstützen. Je nach Anforderung der Leistungseinspeisung oder Leistungsentnahme zum Stützen des Netzes kann eine übergeordnete Steuerung feststellen, ob die Ladestation oder der Windpark oder beide diese Aufgabe übernehmen. Entsprechend kann die übergeordnete Steuerung dies dann koordinieren bzw. steuern.

Nachfolgend wird die Erfindung anhand von Ausführungsformen beispielhaft unter Bezugnahme auf die begleitenden Figuren näher erläutert.
- Figur 1: zeigt eine Windenergieanlage in einer perspektivischen Darstellung.
- Figur 2: zeigt einen Windpark in einer schematischen Darstellung.
- Figur 3: zeigt ein in vier Quadranten unterteiltes Wirk-Blindleistungsdiagramm.
- Figur 4: zeigt schematisch eine Ladestation und Teile eines elektrischen Versorgungsnetzes.

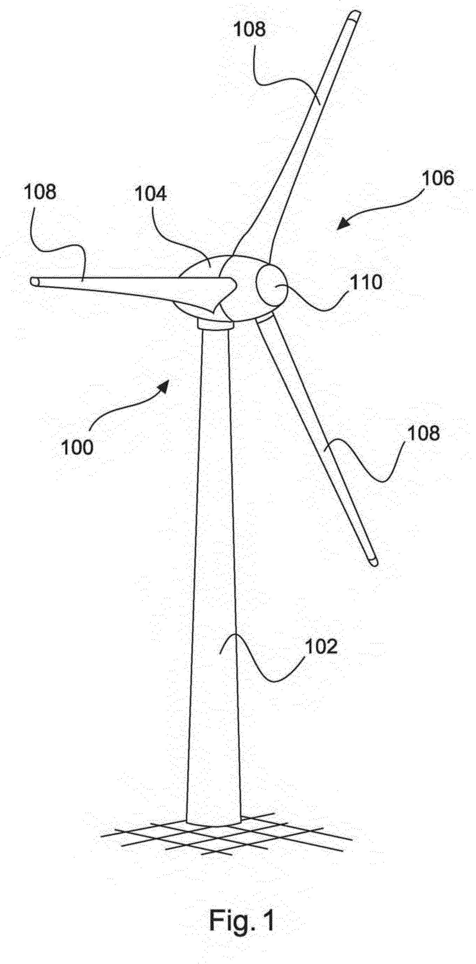

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

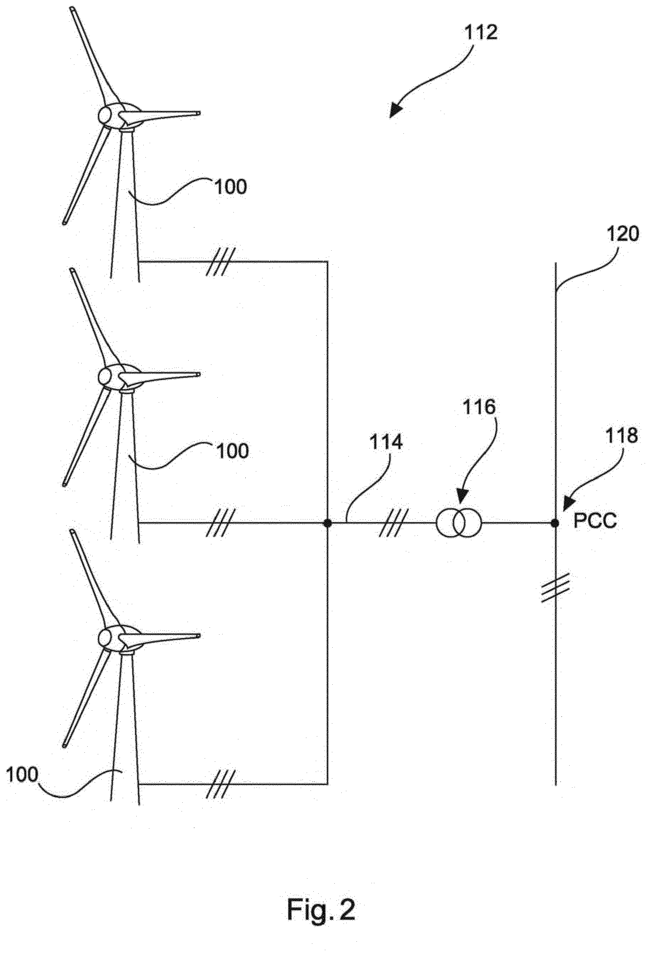

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

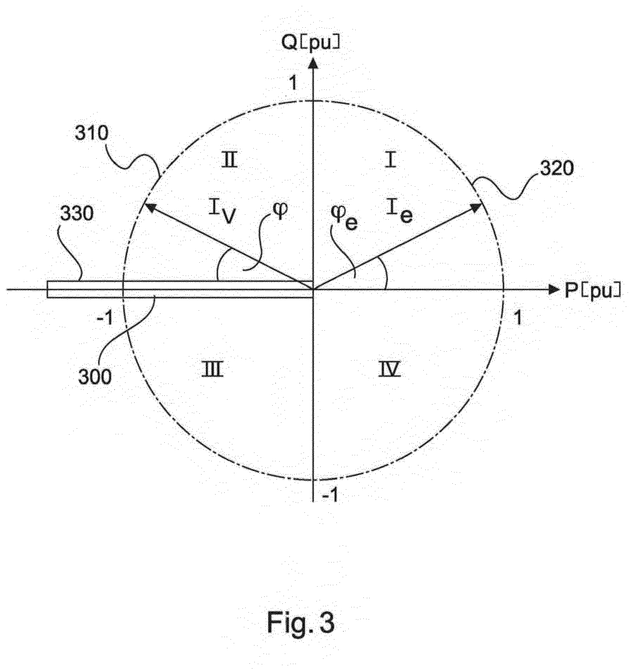

Das Diagramm der Figur 3 zeigt zum Zwecke der Erläuterung ein Wirk-Blindleistungsdiagramm für eine Leistungseinspeisung. An der Abszisse ist die Wirkleistung P und an der Ordinate die Blindleistung Q aufgetragen. Als Werte sind normierte Werte angegeben und es kann beispielsweise auf den betragsmäßigen Wert der Nennleistung einer Ladestation normiert sein. Auf die genauen Werte kommt es hier aber in dieser Veranschaulichung nicht an.

Das Diagramm soll Betriebsbereiche an einer an ein elektrisches Versorgungsnetz angeschlossenen Ladestation veranschaulichen. Dabei kann eine Ladestation gemäß der Figur 3 zugrundegelegt werden, die nachfolgend noch näher beschrieben wird.

Als ungesteuerter Bereich 300 ist der Bereich bezeichnet, der sich bei Verwendung eines ungesteuerten Gleichrichters ergebe. In dem Fall würde die Ladestation durch den ungesteuerten Gleichrichter eine Wirkleistung P aus dem elektrischen Versorgungsnetz entnehmen, die besonders dem jeweils aktuellen Bedarf entspricht. Eine solche Ladestation entnimmt somit nur Wirkleistung, die in ihrer Amplitude von Null bis Nennleistung schwankt. Da das Diagramm der Figur 3 als Diagramm einer Einspeisung gewählt wurde, reicht der Bereich somit von dem Wert 0 bis -1. Er ist als Bereich um die Abszisse eingezeichnet, was aber nur der Veranschaulichung dient. Der theoretische Wert kann im Grunde auf der Abszisse liegen.

Jedenfalls wird gemäß diesem ungesteuerten Bereich 300 keine Blindleistung eingespeist oder entnommen, so dass sich dieser ungesteuerte Bereich 300 im Grunde nur als Strecke auf der Abszisse darstellt. Dieser ungesteuerte Bereich 300 zeigt somit einen Bereich gemäß dem Stand der Technik. Diese Darstellung ist allerdings auch insoweit veranschaulichend, als dass auch bei einem ungesteuerten Betrieb ein Blindleistungsanteil vorhanden sein kann. Der ungesteuerte Bereich 300 könnte dann als gerade Linie in den 2. oder 3. Quadranten dargestellt sein.

Wird nun zumindest ein gesteuerter Gleichrichter verwendet und wird die Ladestation so gesteuert, dass das elektrische Versorgungsnetz elektrisch gestützt wird, kann die Ladestation zumindest in dem gesteuerten Bereich erster Stufe 310 betrieben werden. Dieser gesteuerte Bereich erster Stufe 310 ist als Halbkreis mit gestrichelter Grenze dargestellt. Er verdeutlicht, dass die Ladestation gemäß der gewählten Nomenklatur der Figur 3 im zweiten und dritten Quadranten betrieben werden kann. Die vier Quadranten der Darstellung sind entsprechend mit römischen Zahlen durchnummeriert.

Gemäß diesem gesteuerten Bereich erster Stufe 310 kann somit die Ladestation so gesteuert werden, dass nicht nur Wirkleistung aus dem elektrischen Netz entnommen werden kann, sondern auch so, dass dabei auch Blindleistung eingespeist oder entnommen werden kann. Die Leistung bzw. Energie, die aus dem elektrischen Versorgungsnetz bezogen wird, wird mit einem Entnahmestrom entnommen. Der Entnahmestrom kann auch als Verbrauchsstrom bezeichnet werden. Gemäß dem gesteuerten Bereich erster Stufe kann dieser Entnahmestrom I_{V} einen Phasenwinkel ϕ zur Netzspannung, also der elektrischen Spannung im elektrischen Versorgungsnetz, aufweisen. Weist dieser Phasenwinkel ϕ den Wert Null auf, so wird nur Wirkleistung entnommen und das entspräche dem ungesteuerten Bereich 300. Mathematisch könnte eine solche Situation auch so bezeichnet werden, dass der Entnahmestrom I_{V} einem Einspeisestrom mit einem Phasenwinkel von -180° oder +180° entspricht. Zur besseren Veranschaulichung wurde aber hier die Darstellung eines Entnahmestroms I_{V} gewählt.

Weist dieser Phasenwinkel ϕ nun einen Wert von -90° bis +90° auf, so befindet er sich in dem zweiten oder dritten Quadranten und damit im gesteuerten Bereich erster Stufe 310.

Dieser gesteuerte Bereich erster Stufe 310 ist hier als Halbkreis dargestellt, nämlich unter der idealisierenden Annahme, dass der Phasenwinkel die vollen 180°, also von -90° bis +90° annehmen kann, und unter der Annahme, dass er diesen Wert, der dem Radius des gezeigten Kreises entspricht, für jeden Phasenwinkel erreichen kann, aber auch nicht überschreiten kann.

Es kommt aber auch in Betracht, dass der Entnahmestrom I_{V} bei einem Phasenwinkel, der nicht dem Wert Null entspricht, auch größer sein kann. Beispielsweise kommt in Betracht, dass nur die Wirkleistung die gezeigte Beschränkung aufweist und eine dem Betrage nach höhere Scheinleistung als die maximale Wirkleistung eingespeist werden kann. In dem Fall muss also nicht bei einem von Null verschiedenen Phasenwinkel ϕ unbedingt eine Wirkleistungsreduktion erfolgen.

Es kommt aber auch in Betracht, dass bei einem Phasenwinkel von 90° oder -90° nicht unbedingt mehr volle Blindleistung, also Blindleistung in der auf die Nennleistung normierten Amplitude, eingespeist werden kann. In dem Fall würde der veranschaulichend gezeigte Halbkreis für den gesteuerten Bereich erster Stufe 310 an der Ordinate nicht den Wert 1 bzw. -1 erreichen.

Jedenfalls veranschaulicht Figur 3, dass die Ladestation, auch dann, wenn sie nur zum Wirkleistungsentnehmen vorbereitet ist, dennoch eine Blindleistung einspeisen oder entnehmen kann, indem sie den Phasenwinkel des Entnahmestroms I_{V} beeinflusst.

Gemäß wenigstens einer Ausgestaltung wird eine Erweiterung vorgeschlagen, demnach die Ladestation auch in einem gesteuerten Bereich zweiter Stufe 320 betrieben werden kann. Dieser gesteuerte Bereich zweiter Stufe ist veranschaulichend mit einer strichpunktierten Linie begrenzt, die ebenfalls einen Halbkreis zeigt. Tatsächlich soll dies aber so zu verstehen sein, dass der gesteuerte Bereich zweiter Stufe 320 den gesteuerten Bereich erster Stufe 310 mit umfasst. Der gesteuerte Bereich zweiter Stufe umfasst also alle vier Quadranten.

Eine solche Erweiterung der Ladestation wird besonders durch die Verwendung eines elektrischen Speichers, der auch als Vorladespeicher bezeichnet werden kann, erreicht. Es ist dann also auch möglich, Wirkleistung in das elektrische Versorgungsnetz einzuspeisen. Eine solche Einspeisung von Wirkleistung wird mittels eines Einspeisestroms Iₑ erreicht. Ein solcher Einspeisestrom Iₑ kann einen Phasenwinkel ϕₑ aufweisen. Grundsätzlich kann der Einspeisestrom Iₑ auch anhand des Entnahmestroms I_{V} erläutert werden, wenn sein Phasenwinkel ϕ auf einen Bereich von -180° bis +180° erweitert wird. Eine solche mathematische korrekte Darstellung scheint hier aber wenig anschaulich zu sein, so dass für die Einspeisung der Einspeisestrom Iₑ zugrundegelegt wird.

In diesem gesteuerten Bereich zweiter Stufe 320 kann somit von der Ladestation sogar Wirkleistung eingespeist werden. Außerdem ist aber auch in diesem Bereich, nämlich in dem ersten und vierten Quadranten eine Blindleistungseinspeisung bzw. -entnahme möglich. Auch für diesen gesteuerten Bereich zweiter Stufe 320 ist die Kreisform nur idealisierend zu verstehen. Gleichwohl kann diese Kreisform aber auch einen wichtigen Anwendungsfall darstellen, besonders dann, wenn aufgrund einer Strombegrenzung der Betrag des Einspeisestroms Iₑ begrenzt ist, unabhängig von dem gewählten Einspeisephasenwinkel ϕₑ.

Mit dem gesteuerten Bereich zweiter Stufe können also alle vier Quadranten des Einspeisediagramms in Figur 3 abgedeckt werden. Die Ladestation kann dadurch vielfältige Stützmaßnahmen durchführen.

Zum Zwecke der Veranschaulichung ist in Figur 3 auch ein erweiterter Wirkleistungsbereich 330 eingezeichnet, der durch einen zusätzlichen Verbraucher in der Ladestation erreicht werden kann. Ein solcher erweiterter Wirkleistungsbereich 330 ermöglicht somit, eine über die Nennleistung der Ladestation hinausgehende Leistung dem elektrischen Versorgungsnetz zu entnehmen, wenn dies zur Stützung erforderlich ist. Dieser erweiterte Wirkleistungsbereich 330 ist aber auch zur Veranschaulichung zu verstehen und kann natürlich dann nicht erreicht werden, wenn eine Strombegrenzung des Netzanschlusspunktes eine Wirkleistungsentnahme auf die Nennwirkleistung der Ladestation begrenzt, was dem Wert -1 an der Abszisse entspricht.

Eine erhöhte Wirkleistungsentnahme durch einen solchen Verbraucher kann aber auch dann sinnvoll sein, wenn der ungesteuerte Bereich 300 der Ladestation nicht voll ausgeschöpft werden kann, weil die Ladestation in dem Moment nicht ausreichend Leistungsabnehmer, also zu ladende Fahrzeuge, zur Verfügung hat. In dem Fall würde der ungesteuerte Bereich 300 nicht den Wert -1 erreichen, er könnte aber durch den zusätzlichen Verbraucher erreicht werden. Insoweit veranschaulicht die Figur 3 auch die Möglichkeit, dass an den ungesteuerten Bereich 300 gemäß dem Stand der Technik der gesteuerte Wirkleistungsbereich 330 so angesetzt wird, dass diese Kombination dann nur bis zum Wert -1 reicht.

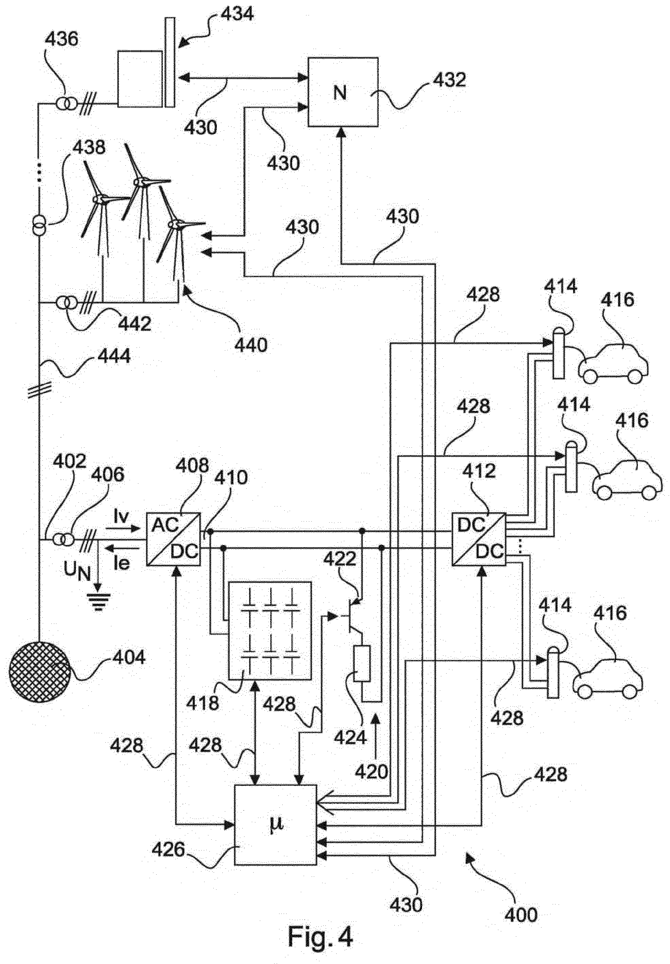

Die Figur 4 zeigt schematisch eine Ladestation 400, die über einen Netzanschlusspunkt 402 an ein elektrisches Versorgungsnetz 404 angeschlossen ist. Dieses elektrische Versorgungsnetz 404 ist hier nur symbolisch dargestellt und kann vereinfachend auch einfach als Netz bezeichnet werden.

Der Netzanschlusspunkt 402 weist einen Netztrafo 406 auf. Darüber bezieht die Ladestation 400 elektrische Energie aus dem Netz 404. Dies erfolgt im Wesentlichen durch eine gesteuerte Leistungsentnahme. Dazu ist der bidirektionale Wechselrichter 408 vorgesehen. Dieser bidirektionale Wechselrichter 408 wandelt im Normalbetrieb elektrischen dreiphasigen Wechselstrom aus dem Versorgungsnetz 404 in einen Gleichstrom um. Dieser Gleichstrom kann in einem Gleichspannungszwischenkreis 410 bereitgestellt werden, der hier als Ausgang des bidirektionalen Wechselrichters 408 angedeutet ist.

Über diesen bidirektionalen Wechselrichter 408 kann die Entnahme der elektrischen Leistung auch so gesteuert werden, dass ein dafür erforderlicher Entnahmestrom I_{V} auch in seinem Phasenwinkel ϕ in Bezug auf die Netzspannung U_{N} eingestellt werden kann. Die Netzspannung U_{N} ist hier der Einfachheit halber an einem Messpunkt zwischen dem Netztrafo 406 und dem bidirektionalen Wechselrichter 408 eingezeichnet. Eine entsprechende Netzspannung des elektrischen Versorgungsnetzes 404 an der anderen Seite des Netztrafos 406 ergibt sich entsprechend durch das Übertragungsverhältnis des Netztrafos 406.

Außerdem kann der hier vorgesehene bidirektionale Wechselrichter 408 auch Leistung in das elektrische Versorgungsnetz 404 einspeisen. Der bidirektionale Wechselrichter 408, der hier vereinfachend auch einfach als Wechselrichter bezeichnet werden kann, kann somit einen dem Entnahmestrom I_{V} entgegengesetzten Einspeisestrom Iₑ erzeugen. Natürlich fließt nur der Entnahmestrom I_{V} oder der Einspeisestrom Iₑ.

Die wesentliche Aufgabe des bidirektionalen Wechselrichters 408 besteht darin, elektrische Energie aus dem Netz 404 zu beziehen, nämlich durch Entnahme elektrischer Leistung aus dem Netz 404. Diese Leistung wird in dem Gleichspannungszwischenkreis 410 bereitgestellt, nämlich im Wesentlichen dem Verteilerblock 412. Der Verteilerblock 412 ist als DC-DC-Wandler dargestellt, um zu veranschaulichen, dass er als Eingang einen Gleichstrom erhält und an einzelne Ladesäulen 414 bedarfsgerecht weitergibt. Veranschaulichend sind drei Ladesäulen 414 dargestellt, die repräsentativ für viele Ladesäulen 414 stehen. An einer Ladesäule 414 soll jeweils ein Elektrofahrzeug 416 zurzeit geladen werden. Grundsätzlich kommt natürlich auch in Betracht, dass nicht immer an jeder Ladesäule 414 auch ein Elektrofahrzeug 416 zum Laden angeschlossen ist.

Die Verteilung mittels des Verteilerblocks 412 ist ebenfalls nur veranschaulichend zu verstehen und es kommt auch in Betracht, dass beispielsweise durch eine zentrale Steuerung jede Ladesäule 414 für sich ihre Ladesteuerung und auch ein ihr zur Verfügung stehendes Energiekontingent steuert und dazu könnte eine solche Ladesäule 414 auch jeweils unmittelbar an den Gleichspannungszwischenkreis 410 angeschlossen sein. Vorzugsweise wird aber ein solcher Verteilerblock 412 vorgeschlagen, der auch eine Spannungsabsenkung auf die Spannungshöhe eines Elektrofahrzeugs 416 durchführt.

Zusätzlich zu diesem Verteilerblock 412, der die Ladesäulen 414 versorgt, ist auch noch eine Batteriebank 418 dargestellt, die ebenfalls an dem Gleichspannungszwischenkreis 410 angeschlossen sein kann. Dieser Batterieblock 418 ist somit ein elektrischer Speicher. Er kann zum Puffern von Energie dienen, um Ladespitzen durch das Laden der Elektrofahrzeuge 416 auszugleichen, so dass solche Ladespitzen, nämlich Leistungsspitzen, nicht, zumindest nicht in voller Höhe, an das elektrische Versorgungsnetz 404 weitergereicht werden. Die Batteriebank 418, die hier repräsentativ für einen elektrischen Speicher steht, kann aber auch dafür verwendet werden, elektrische Leistung in das elektrische Versorgungsnetz 404 einzuspeisen, nämlich durch den Einspeisestrom Iₑ. Durch eine solche Batteriebank 418 ist somit auch ein Betrieb im ersten und vierten Quadranten gemäß dem Diagramm der Figur 3 möglich.

Außerdem ist an dem Gleichspannungszwischenkreis 410 ein Choppersystem 420 angeschlossen. Dieses Choppersystem 420 weist vereinfachend einen Halbleiterschalter 422 und einen Widerstand 424 auf. Durch dieses Choppersystem 420 kann somit kurzfristig Leistung aus dem Gleichspannungszwischenkreis 410 verbraucht werden. Der Halbleiterschalter 422 kann dafür pulsartig angesteuert werden, um entsprechend Strompulse von dem Gleichspannungszwischenkreis 410 durch den Widerstand 424 zu steuern. Der Widerstand 424 wird dabei heiß und kann dadurch die zugeführte Leistung verbrauchen. Das Ansteuern dieses Choppersystems 420 ist besonders für eine kurzfristige Leistungsentnahme zur Netzstützung vorgesehen. Der bidirektionale Wechselrichter 408 kann dafür entsprechend so gesteuert werden, dass er die zu verbrauchende Leistung aus dem elektrischen Versorgungsnetz 404 entnimmt und das Choppersystem 420 diese bzw. einen Anteil davon wie beschrieben verbraucht.

Zur Steuerung der Ladestation 400 ist besonders eine Zentralsteuereinrichtung 426 vorgesehen. Diese Zentralsteuereinrichtung 426 koordiniert grundsätzlich die entsprechenden Elemente der Ladestation 400. Dazu sind veranschaulichend interne Datenübertragungsleitungen 428 vorgesehen, die hier der Einfachheit halber jeweils mit demselben Bezugszeichen bezeichnet sind, um dadurch deutlich zu machen, dass dies interne Datenübertragungsleitungen betrifft, die innerhalb der Ladestation 400 Daten übertragen, insbesondere nämlich in beide Richtungen, also sowohl von der Zentralsteuereinrichtung 426 als auch zur Zentralsteuereinrichtung 426. Die Zentralsteuereinrichtung 426 ist somit über eine interne Datenübertragungsleitung 428 jeweils verbunden mit dem bidirektionalen Wechselrichter 408, der Batteriebank 418, dem Choppersystem 420, jeder Ladesäule 414 und dem Verteilerblock 412.

Entsprechend kann die Zentralsteuereinrichtung 426 besonders den Ladebetrieb der Ladestation 400 steuern, wie beispielsweise gegebenenfalls eine Ladeleistungszuweisung für jede Ladesäule 414 und das entsprechende Entnehmen elektrischer Leistung aus dem Versorgungsnetz 404. Es kann aber auch die Batteriebank 418 zum Puffern gesteuert werden und das Zuordnen der Leistung kann auch über eine Steuerung des Verteilerblocks 412 erfolgen. Besonders können solche Steuerungen kombiniert werden. Im Übrigen können auch weitere Datenübertragungsleitungen vorgesehen sein, wie beispielsweise zwischen den Ladesäulen 414 und dem Verteilerblock 412. Solche Datenübertragung kann auch zentral über die Zentralsteuereinrichtung 426 erfolgen. Es kommen grundsätzlich aber auch andere Datennetztopologien zur Kommunikation innerhalb der Ladestation 400 in Betracht.

Besonders wird aber vorgeschlagen, dass die Zentralsteuereinrichtung 426 den bidirektionalen Wechselrichter 408 steuert, um gegebenenfalls eine Netzstützung dadurch zu steuern. Je nach Art der Netzstützung kann dabei eine entsprechende Steuerung bzw. Anpassung der Steuerung innerhalb der Ladestation 400 erforderlich sein. Beispielsweise kann erforderlich sein, die Batteriebank 418 anzusteuern, wenn der bidirektionale Wechselrichter 408 Wirkleistung in das Netz 404 einspeisen soll. Bei einer Vorgabe der Leistung, die aus dem Netz 404 zu entnehmen ist, kann gegebenenfalls eine Steuerung des Choppersystems 420 erforderlich sein. Auch eine angepasste Steuerung der Ladevorgänge der Elektrofahrzeuge 416, die an die Ladesäulen angeschlossen sind, kommt in Betracht.

Um auch unmittelbare Vorgaben durch einen Netzbetreiber berücksichtigen zu können, ist zudem eine externe Datenübertragungsleitung 430 vorgesehen. Eine solche externe Datenübertragungsleitung 430 ist hier zu einer Netzsteuereinheit 432 dargestellt. Diese Netzsteuereinheit 432 kann auch repräsentativ für einen Netzbetreiber stehen, der das elektrische Versorgungsnetz 404 betreibt. Ein solcher Netzbetreiber bzw. die Netzsteuereinheit 432 kann beispielsweise eine Wirkleistungseinspeisung anfordern. Um das oder Weiteres zu steuern, kann auch die Zentralsteuereinrichtung 426 der Ladestation 400 eine Information über die externe Datenübertragungsleitung 430 an die Netzsteuereinheit 432 geben, die mitteilt, wie viel Leistungskapazität die Ladestation 400 und damit insbesondere die Batteriebank 418 überhaupt zur Verfügung hat. Die Netzsteuereinheit 432 kann beispielsweise aber auch Grenzwerte vorgeben. Solche Grenzwerte können beispielsweise eine maximale Wirkleistungsentnahme für die Ladestation 400 bedeuten, oder eine Gradientenbegrenzung zur maximalen Änderung einer Wirkleistungsentnahme, um nur zwei Beispiele zu nennen.

Figur 4 veranschaulicht außerdem ein Kraftwerk 434, das über einen Kraftwerkstrafo 436 an das elektrische Versorgungsnetz 404 angeschlossen ist. Vorsorglich wird darauf hingewiesen, dass auch weitere Transformatoren 438 vorgesehen sein können, auf die es hier aber nicht ankommt. Ein solcher weiterer Trafo 438 ist nur zur Veranschaulichung eingezeichnet, um deutlich zu machen, dass in dem elektrischen Versorgungsnetz 404 auch unterschiedliche Spannungshöhen existieren können.

Jedenfalls kann das Kraftwerk 434 als konventionelles Kraftwerk vorgesehen sein, wie beispielsweise ein Kohlekraftwerk oder ein Kernkraftwerk. Weiterhin ist veranschaulichend ein Windpark 440 dargestellt, der über einen Parktrafo 442 an das elektrische Versorgungsnetz 404 angeschlossen ist. Sowohl das konventionelle Kraftwerk 434 als auch der Windpark 440 können ebenfalls über externe Datenübertragungsleitungen 430 mit der Netzsteuereinheit 432 kommunizieren. Für den Windpark 440 ist zudem vorgesehen, dass dieser unmittelbar mit der Zentralsteuereinrichtung 426 und damit der Ladestation 400 kommunizieren bzw. Daten austauschen kann.

Besonders soll die Figur 4 veranschaulichen, dass der Windpark 440 und die Ladestation 400 in dem elektrischen Versorgungsnetz 404 im Wesentlichen nahe beieinander angeordnet sind. Sie sind auch an einem Netzabschnitt gleicher Spannungshöhe angeordnet. Durch entsprechende Punkte zwischen dem weiteren Transformator 438 und dem Kraftwerkstrafo 436 soll auch eine entsprechend große Entfernung zu dem Kraftwerk 434 veranschaulicht werden.

Der Windpark 440 ist also vergleichsweise nah an der Ladestation 400 angeordnet, jedenfalls in Bezug auf die Verbindung zwischen der Ladestation und dem Windpark über einen Abschnitt des elektrischen Versorgungsnetzes 404. Dieser Abschnitt ist hier als Verbindungsabschnitt 444 angedeutet und bezeichnet den Bereich zwischen dem Parktrafo 442 und dem Netztrafo 406 der Ladestation 400. Ein solcher Verbindungsabschnitt muss aber nicht als unmittelbare und direkte Verbindungsleitung vorgesehen sein, sondern kann auch weitere Abzweigungen zu anderen Verbrauchern oder dezentralen Einspeisern beinhalten.

Jedenfalls sind die Ladestation 400 und der Windpark 440 so nah beieinander, dass der Windpark 440 die Spannung am Netzanschlusspunkt 402 der Ladestation 400 beeinflussen kann. Genauso kann die Ladestation 400 eine Spannung an dem Parktrafo 442 beeinflussen.

In Kenntnis dieser Nähe zwischen Windpark 440 und Ladestation 400 wird nun vorgeschlagen, dass diese sich besonders hinsichtlich einer Netzstützung koordinieren. Dazu ist eine Kommunikation zwischen dem Windpark 440 und der Ladestation 400 vorgesehen, die hier durch eine externe Datenübertragungsleitung 430 zur Zentralsteuereinrichtung 426 veranschaulicht wird. Eine solche Koordination kann auch die Umsetzung einer Anforderung eines Netzbetreibers durch die Netzsteuereinheit 432 betreffen. Gibt also der Netzbetreiber dadurch beispielsweise eine Anforderung an eine Wirkleistungsreduzierung im elektrischen Versorgungsnetz 404 vor, so kann diese Wirkleistungsreduzierung dadurch koordiniert werden, dass der Windpark 440 einen Teil davon, beispielsweise die Hälfte, weniger einspeist und die Ladestation 400 davon einen Teil zusätzlich entnimmt, zum Beispiel die verbleibende Hälfte.

Eine Koordination kommt aber auch für andere Aufgaben in Betracht, wie beispielsweise eine Spannungsregulierung mittels Blindleistungseinspeisung. Besonders kann hier vorgesehen sein, dass sowohl der Windpark 440 als auch die Ladestation 400 einen Teil einer geforderten Blindleistungseinspeisung übernehmen. Das kann den Vorteil haben, dass keine von beiden, also weder der Windpark 440 noch die Ladestation 400, einen sehr großen Phasenwinkel steuern müssen, was ineffizient sein kann, sondern dass sie sich so aufteilen können, dass beide einen Teil der Blindleistung einspeisen und damit jeweils keinen zu großen Phasenwinkel steuern müssen.

## Patentansprüche

1. Verfahren zum Betreiben einer Ladestation zum Laden mehrerer Elektrofahrzeuge, insbesondere Elektroautos, wobei die Ladestation an einem Netzanschlusspunkt (402) mit einem elektrischen Versorgungsnetz verbunden ist, um darüber mit elektrischer Energie aus dem elektrischen Versorgungsnetz versorgt zu werden, umfassend die Schritte:
- Beziehen elektrischer Energie aus dem elektrischen Versorgungsnetz und
- Laden eines oder mehrerer Elektrofahrzeuge unter Verwendung der aus dem elektrischen Versorgungsnetz bezogenen elektrischen Energie, wobei
- die Ladestation so gesteuert wird, dass das elektrische Versorgungsnetz elektrisch gestützt wird,
**dadurch gekennzeichnet, dass** das Beziehen der elektrischen Energie in Abhängigkeit einer Netzeigenschaft des elektrischen Versorgungsnetzes gesteuert wird, und
- dass eine Netzeigenschaft eine Eigenschaft des elektrischen Versorgungsnetzes bezeichnet, ausgewählt aus der Liste aufweisend:
- eine Netzsensitivität, die besonders als eine Spannungsreaktion des elektrischen Versorgungsnetzes am Netzanschlusspunkt (402) auf eine geänderte Leistungsentnahme der Ladestation am Netzanschlusspunkt (402) definiert ist, und
- ein Kurzschlussstromverhältnis, das ein Verhältnis eines am Netzanschlusspunkt (402) maximal durch das elektrische Versorgungsnetz bereitstellbaren Kurzschlussstrom in Bezug auf eine durch die Ladestation entnehmbare Nennleistung bezeichnet.

2. Verfahren nach Anspruch 1,
**dadurch gekennzeichnet, dass**
das Beziehen der elektrischen Energie so gesteuert wird, dass das elektrische Versorgungsnetz elektrisch gestützt wird.

3. Verfahren nach Anspruch 1 oder 2,
**dadurch gekennzeichnet, dass**
das Beziehen der elektrischen Energie in Abhängigkeit eines Netzzustandes des elektrischen Versorgungsnetzes gesteuert wird, und dass
- ein Netzzustand einen Zustand des elektrischen Versorgungsnetzes bezeichnet, ausgewählt aus der Liste aufweisend:
- eine Netzfrequenz,
- eine Netzfrequenzänderung,
- eine Netzspannung,
- eine Netzspannungsänderung und
- eine Oberwelligkeit der Netzspannung.

4. Verfahren nach einem der vorstehenden Ansprüche,
**dadurch gekennzeichnet, dass**
das Beziehen elektrischer Energie in Abhängigkeit vorgebbarer Sollwerte gesteuert wird, insbesondere in Abhängigkeit eines oder mehrerer durch ein externes Signal vorgebbarer Sollwerte, insbesondere Leistungswerte und/oder dass das Beziehen der elektrischen Energie so gesteuert wird, dass Leistung, insbesondere Wirkleistung, aus dem Versorgungsnetz in Abhängigkeit der Netzfrequenz bezogen wird und/oder, dass
die Ladestation in Abhängigkeit eines Netzzustandes und/oder einer Vorgabe durch einen Netzbetreiber des Versorgungsnetzes Blindleistung aus dem Versorgungsnetz bezieht oder in dieses einspeist und/oder, dass
- die Ladestation dazu vorbereitet ist, Netzfehler im Versorgungsetz zu durchfahren, insbesondere dass
- die Ladestation im Fall eines Netzfehlers mit dem Versorgungsnetz verbunden bleibt und elektrische Leistung in Abhängigkeit eines Netzzustandes und/oder in Abhängigkeit einer Vorgabe durch den Netzbetreiber aus dem Versorgungsnetz entnimmt oder einspeist und/oder dass
- die Ladestation so gesteuert wird, dass sie nach dem Netzfehler so viel Leistung aus dem Versorgungnetz bezieht, wie unmittelbar vordem Netzfehler.

5. Verfahren nach einem der vorstehenden Ansprüche,
**dadurch gekennzeichnet, dass**
die Ladestation so gesteuert wird, dass sie in Abhängigkeit eines Netzzustandes und/oder in Abhängigkeit einer Vorgabe durch den Netzbetreiber elektrische Leistung aus einem elektrischen Speicher der Ladestation in das Versorgungsnetz einspeist und/oder, dass
die Ladestation in Abhängigkeit der Netzfrequenz und/oder einer Änderung der Netzfrequenz eine Momentanreserve bereitstellt, indem
- die Ladestation die momentan aus dem Versorgungsnetz entnommene Leistung verringert und/oder
- Leistung aus dem elektrischen Speicher der Ladestation in das Versorgungsnetz einspeist.

6. Verfahren nach einem der vorstehenden Ansprüche,
**dadurch gekennzeichnet, dass**
die Ladestation in Abhängigkeit der Netzfrequenz und/oder einer Änderung der Netzfrequenz zusätzliche Leistung aus dem Versorgungsnetz aufnimmt, indem
- die Ladestation die momentan aus dem Versorgungsnetz entnommene Leistung erhöht, um mehr Leistung in den elektrischen Speicher der Ladestation einzuspeichern, und/oder die Leistung zum Laden des einen oder der mehreren Elektrofahrzeuge erhöht, und/oder
- Leistung in einem zusätzlichen Verbraucher verbraucht, insbesondere in einem Choppersystem, das elektrische Leistung gezielt in eine Widerstandsanordnung aus einem oder mehreren elektrischen Widerständen steuert, um dadurch die Leistung thermisch zu verbrauchen.

7. Verfahren nach einem der vorstehenden Ansprüche,
**dadurch gekennzeichnet, dass**
- zum Beziehen elektrischer Energie aus dem Versorgungsnetz elektrische Leistung aus dem Versorgungsnetz entnommen wird,
- wenigstens eine Änderungsgrenze vorgegeben wird, um Änderungen der elektrischen Leistung in ihrer Änderungsgeschwindigkeit zu begrenzen, insbesondere, dass
- ein gemeinsamer oder ein oberer und ein unterer Grenzgradient vorgegeben wird bzw. werden, um einen zeitlichen Anstieg bzw. zeitlichen Abfall der Leistung zu begrenzen.

8. Verfahren nach einem der vorstehenden Ansprüche,
**dadurch gekennzeichnet, dass**
zusätzlich oder weniger benötigte Leistung, insbesondere bedingt durch die Begrenzung der Änderungsgeschwindigkeit der entnommenen Leistung, bereitgestellt bzw. aufgenommen wird, durch wenigstens eine Maßnahme aus der Liste aufweisend:
- Verwendung des elektrischen Speichers der Ladestation,
- Variation der Ladeleistung der jeweils zu ladenden Elektrofahrzeugs, und
- Ansteuern weiterer Verbraucher der Ladestation.

9. Verfahren nach einem der vorstehenden Ansprüche,
**dadurch gekennzeichnet, dass**
- das Beziehen elektrischer Energie aus dem Versorgungsnetz,
- das Laden der Elektrofahrzeuge,
- ein Ansteuern weiterer Verbraucher der Ladestation und/oder
- ein Einspeisen elektrischer Leistung in das Versorgungsnetz
unter Verwendung eines virtuellen Speichers gesteuert wird, wobei der virtuelle Speicher
- Leistung, die die Ladestation bereitstellen kann, insbesondere zum Laden der Elektrofahrzeuge und zum Einspeisen in das Versorgungsnetz, als geladene Speicherkapazität berücksichtigt, und/oder
- Leistung, die die Ladestation aufnehmen kann, insbesondere aus dem Versorgungsnetz, als aufladbare Speicherkapazität berücksichtigt.

10. Verfahren nach einem der vorstehenden Ansprüche,
**dadurch gekennzeichnet, dass**
eine maximal aus dem Versorgungsnetz zu entnehmende Leistung fest oder variabel vorgebbar ist, insbesondere, dass
- eine feste Vorgabe durch ein externes Signal durch einen Netzbetreiber erfolgt, und/oder
- eine variable Vorgabe in Abhängigkeit einer Netzeigenschaft und/oder eines Netzzustandes erfolgt.

11. Verfahren nach einem der vorstehenden Ansprüche,
**dadurch gekennzeichnet, dass**
- wenigstens ein Betriebszustand wenigstens eines an die Ladestation oder dasselbe Versorgungsnetz angeschlossenen Windparks berücksichtigt wird und/oder
- der wenigstens eine Windpark zumindest teilweise durch die Ladestation oder durch eine der Ladestation und dem wenigstens einen Windpark übergeordneten Gesamtsteuereinheit gesteuert wird und/oder, dass
die Ladestation und wenigstens ein bzw. der wenigstens eine Windpark dazu koordiniert werden,
- einen Leistungsfluss im Versorgungsnetz zu steuern, und/oder
- eine Spannungsregelung im Versorgungsnetz zu unterstützen.

12. Ladestation zum Laden mehrerer Elektrofahrzeuge, insbesondere Elektroautos, wobei die Ladestation an einem Netzanschlusspunkt (402) mit einem elektrischen Versorgungsnetz verbunden ist, um darüber mit elektrischer Energie aus dem elektrischen Versorgungsnetz versorgt zu werden, umfassend:
- einen aktiven Gleichrichter oder bidirektionalen Wechselrichter zum Beziehen elektrischer Energie aus dem elektrischen Versorgungsnetz,
- mehrere Ladeterminals jeweils zum Laden eines der Elektrofahrzeuge unter Verwendung der aus dem elektrischen Versorgungsnetz bezogenen elektrischen Energie, und
- eine Zentralsteuerung zum Steuern der Ladestation, wobei die Zentralsteuerung dazu vorbereitet ist, die Ladestation so zu steuern, dass das elektrische Versorgungsnetz elektrisch gestützt wird,
**dadurch gekennzeichnet, dass** das Beziehen der elektrischen Energie in Abhängigkeit einer Netzeigenschaft des elektrischen Versorgungsnetzes gesteuert wird, und
- dass eine Netzeigenschaft eine Eigenschaft des elektrischen Versorgungsnetzes bezeichnet, ausgewählt aus der Liste aufweisend:
- eine Netzsensitivität, die besonders als eine Spannungsreaktion des elektrischen Versorgungsnetzes am Netzanschlusspunkt (402) auf eine geänderte Leistungsentnahme der Ladestation am Netzanschlusspunkt (402) definiert ist, und
- ein Kurzschlussstromverhältnis, das ein Verhältnis eines am Netzanschlusspunkt (402) maximal durch das elektrische Versorgungsnetz bereitstellbaren Kurzschlussstrom in Bezug auf eine durch die Ladestation entnehmbare Nennleistung bezeichnet, insbesondere, dass
die Ladestation dazu vorbereitet ist, gemäß einem der Ansprüche 1 bis 11 betrieben zu werden, insbesondere, dass die Zentralsteuerung dazu vorbereitet ist, ein Verfahren gemäß einem der Ansprüche 1 bis 11 auszuführen.

13. Ladestation nach Anspruch 12,
**dadurch gekennzeichnet, dass**
wenigstens ein elektrischer Speicher vorgesehen ist, um darin elektrische Energie zwischenzuspeichern, insbesondere
- um bei Bedarf durch das Zwischenspeichern mehr Leistung aus dem Versorgungsnetz aufnehmen zu können, als in dem Moment zum Laden von Elektrofahrzeugen benötigt wird, und/oder
- um in dem elektrischen Speicher gespeicherte Energie bei Bedarf dazu zu verwenden, zum Laden der Elektrofahrzeuge mehr Leistung bereitzustellen, als in dem Moment aus dem Versorgungsnetz entnommen wird, und/oder
- Leistung in das Versorgungsnetz einzuspeisen.

14. Ladestation nach einem der Ansprüche 12 oder 13,
**dadurch gekennzeichnet, dass**
- wenigstens ein weiterer Verbraucher vorgesehen ist, um bei Bedarf, insbesondere wenn mehr Leistung aus dem Versorgungsnetz entnommen wird, als in dem Moment zum Laden von Elektrofahrzeugen benötigt wird, Leistung zu verbrauchen, wobei
- die Ladestation, insbesondere die Zentralsteuerung, dazu vorgesehen ist, den wenigstens einen weiteren Verbraucher anzusteuern, insbesondere, dass
der wenigstens eine weitere Verbraucher ausgewählt ist aus der Liste aufweisend:
- ein Choppersystem, das elektrische Leistung gezielt in eine Widerstandsanordnung aus einem oder mehreren elektrischen Widerständen steuert, um dadurch die Leistung thermisch zu verbrauchen und
- eine Umwandlungsvorrichtung, insbesondere ein Elektrolyseur, um elektrische Leistung in eine andere Energieform, insbesondere ein Gas zu wandeln.

15. Ladestation nach einem der Ansprüche 12 bis 14,
**dadurch gekennzeichnet, dass** sie
- über eine direkte elektrische Leitung zum Austausch elektrischer Leistung, insbesondere über jeweils einen Gleichspannungszwischenkreis, oder
- über dasselbe Versorgungsnetz mit einem Windpark und/oder mit wenigstens einer weiteren Ladestation gekoppelt ist, und dazu vorbereitet ist, die Steuerung der Ladestation mit einer Steuerung des Windparks, zumindest mit einer Steuergröße des Windparks zu koordinieren.
